# FASCICULE DE BREVET EUROPEEN

(11) **EP 4 139 118 B1**
(45) Date de publication et mention de la délivrance du brevet: **24.04.2024**
(21) Numéro de dépôt: 21732947.3
(22) Date de dépôt: 21.04.2021
(51) Int. Cl.: B29C 70/46, B29B 11/16, B29C 70/48, B29C 70/44, B29C 70/86, B29D 99/00, B29C 37/00, B29C 70/08, B29C 70/78

(54) **ÉLÉMENT COMPOSITE INTERMÉDIAIRE, PROCÉDÉ DE FABRICATION ET PIÈCE COMPOSITE**
ZWISCHENVERBUNDELEMENT, HERSTELLUNGSVERFAHREN UND VERBUNDTEIL
INTERMEDIATE COMPOSITE ELEMENT, PRODUCTION PROCESS AND COMPOSITE PART

(30) Priorité: 22.04.2020 FR 2004026
(43) Date de publication de la demande: 01.03.2023
(73) Titulaire: Hexcel Reinforcements, 01120 Dagneux (FR)
(72) Inventeur: POULLEAU, Pascal, 38510 PASSINS (FR); DUCROT, Mayeul, 73420 VIVIERS DU LAC FRANCE (FR); DELALANDE, Sylvain, 73370 LE BOURGET DU LAC (FR); PERRILLAT COLLOMB, Pascal, 38510 SAINT-VICTOR-DE-MORESTEL (FR)
(74) Mandataire: Cabinet Beau de Loménie
(86) Numéro de dépôt international: PCT/FR2021/050691
(87) Numéro de publication internationale: WO 2021/214410

(56) Documents cités:
- DE-A1-102014 009 446
- DE-B4-102014 009 446
- US-A1- 2019 338 881

## Description

### Domaine Technique

La présente invention concerne le domaine technique des matériaux de renfort, adaptés à la constitution de pièces composites. Plus précisément, l'invention a pour objet des matériaux de renfort, adaptés à la réalisation de pièces composites en association avec une résine injectée ou infusée.

### Technique antérieure

Les pièces composites, comprenant, d'une part, un ou plusieurs renforts fibreux et, d'autre part, une matrice (qui est, le plus souvent, principalement de type thermodurcissable et peut inclure un ou plusieurs thermoplastiques), sont de plus en plus utilisées, notamment dans le domaine de l'aéronautique, de l'automobile ou de l'énergie, en remplacement de pièces métalliques, car elles allient à la fois légèreté, propriétés mécaniques et résistance à la corrosion.

La fabrication de pièces ou d'articles composites peut être réalisée par deux types de procédés : les procédés dits "indirects" et les procédés dits "directs" ou "LCM" (de l'anglais « Liquid Composite Moulding »).

Un procédé indirect met en oeuvre des matériaux fibreux préimprégnés d'une résine polymérique qui sont mis en forme pour conduire à la pièce composite souhaitée, grâce à une opération de moulage en compression. Les matériaux fibreux préimprégnés comprennent la quantité de résine souhaitée pour la pièce composite finale. Les principaux procédés de fabrication de moulage en compression sont :
- les procédés "SMC" (de l'anglais « Sheet Molding Compounds »), lorsque des feuilles de préimprégnés sont positionnées sous la forme d'un empilement ;
- les procédés "BMC" (de l'anglais « Bulk Molding Compounds ») qui associent des fibres coupées mélangées avec de la résine lors d'une opération de moulage en compression.

Dans l'art antérieur, il a été proposé d'utiliser des morceaux, notamment de forme rectangulaire, constitués d'un ensemble de fibres unidirectionnelles imprégné, qui peuvent être soit directement positionnés en vrac dans un moule, soit être utilisés pour former intermédiairement des matériaux en feuille dans lesquels les morceaux sont disposés de manière aléatoire en s'étendant sensiblement dans le plan de la feuille. Le matériau intermédiaire en feuille ainsi obtenu est ensuite découpé à la taille du moule, empilé dans le moule et moulé en compression. Ces types de matériaux vont pouvoir fluer lors des opérations de moulage, et remplir toutes les parties du moule utilisé. La société Hexcel Corporation (Stamford USA) propose des matériaux en feuille de ce type, commercialisés sous le nom HexMC^{®}.

De tels procédés de moulage en compression sont particulièrement adaptés à la fabrication de pièces de forme complexe en trois dimensions, mais présentent des limites pour la réalisation de pièces de grande dimension.

Un procédé direct est défini par le fait qu'un ou plusieurs renforts fibreux sont mis en oeuvre à l'état "sec" (c'est-à-dire sans la matrice finale), la résine devant servir de matrice, étant mise en oeuvre séparément, par exemple, par injection dans le moule contenant les renforts fibreux (procédé "RTM", de l'anglais « Resin Transfer Moulding »), par infusion au travers de l'épaisseur des renforts fibreux (procédé "LRI", de l'anglais « Liquid Resin infusion » ou procédé "RFI", de l'anglais « Resin Film infusion »), ou bien encore par enduction/imprégnation manuelle au rouleau ou au pinceau, sur chacune des couches unitaires de renforts fibreux, appliquées de manière successive sur la forme.

Pour les procédés RTM, LRI ou RFI, il faut en général tout d'abord fabriquer une préforme fibreuse ou empilement de la forme de l'article fini désiré, puis imprégner cette préforme ou empilement d'une résine destinée à constituer la matrice. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

A titre d'exemples de matériaux adaptés aux procédés directs, on peut citer les renforts fibreux qui associent une nappe unidirectionnelle de fibres de renfort, et notamment de carbone à deux voiles de fibres thermoplastiques, accolés sur chacune des faces de la nappe unidirectionnelle. De tels matériaux sont notamment décrits dans les demandes EP 1 125 728, US 6,828,016, WO 00/58083, WO 2007/015706, WO 2006/121961, US 6,503,856, US 2008/7435693, WO 2010/046609, WO 2010/061114, EP 2 547 816, US 2008/0289743, US 2007/8361262, US 2011 /9371604 et WO 2011 /048340.

Les renforts multiaxiaux, couramment nommés tissus non tissés (en anglais « non-crimp fabrics » NCF), sont également parfaitement adaptés aux procédés directs. De tels renforts multiaxiaux constitués d'un empilement de plusieurs nappes unidirectionnelles de fibres de renfort (en particulier, en carbone, verre ou aramide) disposées selon plusieurs orientations et cousues entre elles sont notamment décrits dans les demandes EP 2 547 816 et WO 2010/067003.

Les procédés directs et indirects utilisent donc des matériaux, des dispositifs et des procédés différents.

Différents procédés ou dispositifs sont proposés dans la technique antérieure, notamment pour permettre la fabrication de pièces tridimensionnelles, de forme plus ou moins complexe.

La demande WO 2016/207309 propose un procédé de moulage de préimprégnés utilisant au moins une ébauche en un matériau de moulage qui comprend un guide, qui, lors du moulage, dirige l'écoulement du matériau de moulage à mouler dans la cavité du moule de compression, de manière à pouvoir obtenir une forme complexe avec des nervures de surface. Le matériau de renforcement fibreux est du type HexMC^{®} ou prepreg. Les matériaux HexMC^{®}, constitués de morceaux de ruban unidirectionnel imprégnés de résine thermodurcissable, agencés selon un arrangement quasi-isotropique pour former une couche de matériau fibreux, peuvent facilement être thermoformés selon un agencement tridimensionnel.

La demande WO 2017/029121 décrit une autre solution consistant en un moule pour produire des pièces composites par moulage en compression, comprenant un insert interne ayant des parois qui peuvent être déplacées indépendamment pour augmenter ou diminuer les dimensions de l'insert.

Il a également été proposé de combiner différents matériaux ou différents éléments intermédiaires pour fabriquer certaines pièces, notamment, lorsque celles-ci présentent des parties de forme ou de complexité différente, ou encore des parties qui vont être soumises à des sollicitations différentes.

Il a notamment été proposé dans l'art antérieur de lier entre elles deux pièces moulées par collage ou rivetage, ce qui peut causer des fragilités à l'interface et nécessite des étapes d'assemblage additionnelles. En particulier, une pièce composite moulée constituant une nervure ou une saillie peut être rapportée, selon une telle technique, sur une autre pièce composite moulée. Néanmoins, un simple collage n'est en général pas jugé suffisant, pour des pièces aéronautiques notamment, et doit être complété par une liaison mécanique, du type rivetage (voir en particulier l'« Advisory Circular » de l'US Department of Transportation Federal Aviation Administration, 20-107 datée du 9 août 2009 et l'Article 14 CFR § 23.573(a)), ce qui impose d'utiliser des outillages adaptés et nécessite une étape de liaison supplémentaire.

La demande WO 2014/168701, quant à elle, propose de réaliser des structures multi-composants à partir de différents matériaux : un composant moulable de géométrie complexe composé de morceaux de ruban unidirectionnel préimprégnés de résine thermodurcissable du type HexMC^{®}, et un composant de structure composé de fibres unidirectionnelles préimprégnées de résine thermodurcissable, qui sont combinés puis moulés en une seule étape par cuisson de la résine thermodurcissable. Les microfissurations au niveau de l'interface entre les deux composants, lors du moulage à haute température, est minimisé par le choix du coefficient de dilatation thermique du composant de structure et du composant moulable. Pour cela, il est proposé d'intégrer dans le composant de structure des fibres continues orientées dans différentes directions. Chacun des composants comprend de 25 à 45% massique de résine thermodurcissable.

D'autres documents proposent des procédés adaptés à la fabrication de pièces très spécifiques : le document US 2019/338881 décrit un élément de fixation de forme tubulaire pour la réhabilitation de pipelines avec un liner qui comprend une première partie composée de fibres de renfort et d'une composition de résine qui est substantiellement totalement cuite et une seconde partie dans laquelle pénètre la composition de résine, cette seconde partie étant constituée de fibres sèches, en particulier d'un feutre. Le document DE 102014009446 décrit, quant à lui, un élément d'attache qui comprend une partie moulée en thermoplastique, dans laquelle, une couche de fibres 11 est insérée. Cette couche de fibres comporte deux parties : une partie totalement prise dans la partie moulée et deux parties sèches 11.1 non imprégnées de thermoplastique qui s'étendent à l'extérieur de la partie moulée. Ensuite, une pièce composite comprenant ce point d'attache est obtenue par imprégnation de la partie sèche avec une résine thermodurcissable.

Dans ce contexte la présente invention propose de nouveaux éléments composites intermédiaires, leurs procédés de fabrication et leurs mises en oeuvre dans des procédés de fabrication de pièces composites, qui offrent plus de possibilités d'adaptation, en fonction des dispositifs directs ou indirects disponibles sur certains sites et qui soient plus adaptés à la conception de pièces de formes et de dimensions variées. En particulier, l'invention est parfaitement adaptée à l'élaboration de pièces composites de forme complexe, telles que des pièces qui comportent des nervures ou protubérances. Les procédés selon l'invention peuvent facilement être adaptés à différents types de pièces composites et peuvent conduire à des pièces composites qui présentent une bonne résistance aux sollicitations mécaniques. En particulier, l'invention propose un élément composite intermédiaire et un procédé qui met en oeuvre différentes parties nécessaires à la réalisation d'une pièce composite, dont ledit élément composite intermédiaire et, ensuite, de les assembler avec une liaison satisfaisante au niveau de la jonction entre les deux parties.

### Exposé de l'invention

Tout d'abord, la présente invention concerne un élément composite intermédiaire comprenant :
- au moins une partie moulée comprenant un ensemble de fibres de renfort intégrées dans une matrice de polymère thermodurci,
- au moins un empilement sec de couches de fibres de renfort, comprenant au moins une couche poreuse polymérique intercalée entre deux couches de fibres de renfort successives, la partie moulée étant apposée en surface de l'empilement sec et liée à ce dernier, caractérisé en ce que le polymère thermodurci pénètre dans une partie de l'épaisseur de l'empilement sec à partir de la surface de l'empilement sec sur laquelle la partie moulée est apposée, ce qui assure la liaison entre l'empilement sec et la partie moulée.

Dans le cadre de l'invention, le polymère thermodurci qui forme la matrice polymérique de la partie moulée pénètre également dans l'épaisseur de l'empilement sec. Cette pénétration permet d'assurer une liaison forte entre la partie moulée et l'empilement sec. De ce fait, il n'est pas nécessaire de compléter cette liaison par une liaison mécanique additionnelle. Aussi, de manière avantageuse, dans le cadre de l'invention, la liaison entre la partie moulée et l'empilement sec n'est pas assuré par un organe de fixation mécanique, du type rivet, vis ... De plus, un tel élément composite intermédiaire est parfaitement adapté, pour la réalisation d'une pièce composite complexe, en association avec une résine injectée ou infusée qui va notamment pénétrer dans l'empilement sec, selon les procédés directs. En effet, le polymère thermodurci ne pénétrant que dans une partie de l'épaisseur de l'empilement, il sera nécessaire pour l'obtention d'une pièce composite de compléter cet empilement sec par ajout d'une matrice polymérique, ultérieurement lors de la réalisation d'une pièce composite. En particulier, l'empilement sec comporte de 4 à 20 couches de fibres de renfort, de préférence de 8 à 16 couches de fibres de renfort, et au moins 2, de préférence au moins 4 couches de fibres de renfort de l'empilement sec ne comportent pas de polymère thermodurci ayant pénétré depuis la pièce moulée. Ces couches se trouvent sur la partie externe de l'empilement opposée à la surface associée à la pièce moulée.

De manière avantageuse, dans l'élément composite intermédiaire, l'empilement sec de couches de fibres de renfort présente une épaisseur moyenne d'au moins 5 mm et le polymère thermodurci pénètre dans une partie de l'épaisseur de l'empilement à partir de la surface de l'empilement selon une profondeur moyenne de pénétration d'au moins 2 mm. Avec une telle pénétration, et ce quelle que soit l'épaisseur de l'empilement sec, la liaison entre l'empilement sec et la partie moulée (également nommée pièce moulée) est satisfaisante, et va permettre d'obtenir dans la pièce composite finale obtenue à partie de l'élément composite intermédiaire, des bonnes propriétés de résistance au cisaillement à l'interface. Dans le cadre de l'invention, l'épaisseur moyenne de l'empilement et la profondeur moyenne de pénétration peuvent être mesurées en effectuant 10 mesures perpendiculairement au plan d'interface entre la pièce moulée et l'empilement sec, et en calculant la moyenne arithmétique de ces mesures. De telles mesures pourront être réalisées en effectuant une coupe de l'élément composite intermédiaire, comme détaillé dans les exemples. Une autre manière de caractériser la pénétration du polymère thermodurci est d'observer le nombre de couches de fibres de renfort de l'empilement sec, dans lesquelles le polymère thermodurci a pénétré, comme dit précédemment.

Dans le cadre de l'invention, l'empilement sec est qualifié de « sec », car il comprend une part polymérique représentant au plus 10% de la masse totale de l'empilement, de préférence de 0,5 à 10% de la masse totale de l'empilement, et préférentiellement de 2 à 6% de la masse totale de l'empilement, ladite part polymérique assurant au moins partiellement, la cohésion de l'empilement. Cette part polymérique ne comprend pas la quantité de polymère thermodurci ayant pénétré dans l'empilement sec.

Cette part polymérique peut, en particulier, être un polymère thermoplastique, un polymère comprenant une part thermoplastique ou un mélange de tels polymères.

L'élément composite intermédiaire selon l'invention présente un caractère unitaire et cohérent. Aussi, non seulement la partie moulée et l'empilement sec sont liés entre eux, mais l'empilement sec forme lui aussi une partie qui se tient, c'est-à-dire que les couches de fibres de renfort (également nommées couches fibreuses) de l'empilement sec sont liées entre elles. Une telle liaison peut être assurée, soit par des liaisons mécaniques de type couture ou tricotage, soit grâce à la part polymérique contenue dans l'empilement sec, comme cela est détaillé ci-après.

Selon un mode de réalisation, les couches de fibres de renfort sont des tissus.

Selon des modes de réalisations préférées, les couches de fibres de renfort sont des nappes unidirectionnelles de fibres de renfort, de préférence orientées selon au moins deux directions différentes.

Selon un mode de réalisation, l'empilement sec est formé d'un ou de plusieurs NCF, chaque NCF étant un ensemble de plusieurs nappes unidirectionnelles de fibres de renfort orientées selon au moins deux directions différentes liées par couture ou tricotage. Dans ce cas, il se peut que l'empilement sec soit formé d'un ou plusieurs NCF, chaque NCF étant un ensemble de plusieurs nappes unidirectionnelles de fibres de renfort orientées selon au moins deux directions différentes, une ou plusieurs couche(s) poreuse(s) polymérique(s) pouvant être présente(s) en surface ou entre les nappes unidirectionnelles, ledit ensemble étant lié par couture ou tricotage.

Lorsque les couches fibreuses sont des tissus ou, de préférence, des nappes unidirectionnelles de fibres de renfort, que celles-ci se trouvent ou non sous la forme de NCF, au moins une couche poreuse polymérique est intercalée entre deux tissus successifs ou deux nappes unidirectionnelles de fibres de renfort successives. Ceci permet d'optimiser les propriétés mécaniques de la pièce composite qui va ensuite être obtenue.

En particulier, la ou les couche(s) poreuse(s) polymérique(s) présente(s) au sein de l'empilement sec, quel que soit le mode de mise en oeuvre de l'invention, est(sont) un film poreux, une grille, un dépôt de poudre, un tissu ou, de préférence, un non-tissé ou voile.

Avec l'utilisation de telle(s) couche(s) poreuse(s) polymérique(s), l'empilement sec peut présenter un caractère cohérent obtenu, au moins en partie, grâce au caractère collant à chaud de la ou des couche(s) poreuse(s) polymérique(s) présente(s) entre deux couches fibreuses.

En général, les fibres de renfort de l'empilement sec et/ou de la partie moulée sont des fibres de verre, de carbone, d'aramide ou de céramique, les fibres de carbone étant particulièrement préférées.

Selon un mode de réalisation préféré particulièrement adapté à la réalisation de pièces moulées complexes, la partie moulée est obtenue par moulage de morceaux de fibres unidirectionnelles imprégnées d'une résine thermodurcissable, qui, de préférence, forme un tapis intermédiaire dans lequel les morceaux sont disposés de façon aléatoire. En particulier, ces morceaux sont rectangulaires ou sensiblement rectangulaires, et présentent, de préférence, une longueur de 1 cm à 10 cm, une largeur de 2 mm à 2 cm et une épaisseur de 0,02 mm à 0,50 mm.

Dans le cadre de l'invention, par «pièce complexe», et donc en particulier par pièce ou partie « moulée complexe», on entend notamment des pièces présentant au moins une surface non développable, une surface développable correspondant à une surface réglée c'est-à-dire que son plan tangent est le même le long d'une génératrice. A titre d'exemple, on peut citer les pièces d'épaisseur non constante, comportant une partie en forme de T ou elle-même en forme de T. De telles pièces moulées peuvent être obtenues par les techniques classiques de moulage en compression, notamment.

En particulier, dans les éléments composites intermédiaires selon l'invention, le polymère thermodurci de la partie moulée est une époxy.

En général, le polymère thermodurci représente au moins 25 % en masse de la partie moulée, de préférence de 25 à 55% en masse de la partie moulée.

De manière avantageuse, dans les éléments composites intermédiaires selon l'invention, l'empilement sec comporte de 4 à 20 couches de fibres de renfort, de préférence de 8 à 16 couches de fibres de renfort.

Selon certains modes de réalisation de l'invention, la partie moulée présente une forme complexe, par rapport à la forme de l'empilement. En particulier, la partie moulée a la forme d'une charnière, d'un point d'accroche, d'une nervure, d'une poutre nervurée, d'un support, d'une console, d'un canal, d'une attache, d'une chape, d'un raidisseur, d'un encadrement de trappe, d'un encadrement de porte, d'un bras de levier, d'une embase, une ferrure, d'une jointure, d'un emboitement ou d'un pivot.

Selon un autre de ses aspects, l'invention concerne un procédé de fabrication d'un élément composite intermédiaire comprenant :
- au moins une partie moulée comprenant un ensemble de fibres de renfort intégrées dans une matrice de polymère thermodurci,
- au moins un empilement sec de couches de fibres de renfort, comprenant au moins une couche poreuse polymérique intercalée entre deux couches de fibres de renfort successives, la partie moulée étant apposée en surface de l'empilement et liée à ce dernier, ledit procédé de fabrication comportant les étapes successives suivantes :
   **a-** apposer au moins un ensemble de fibres de renfort préimprégné d'un polymère thermodurcissable, sur une zone de surface d'un empilement sec initial de plis de renfort fibreux, comprenant, au moins une couche poreuse polymérique intercalée entre deux couches de fibres de renfort successives,
   **b-** réaliser, dans un moule, une opération de moulage en compression à chaud de l'ensemble de fibres de renfort préimprégné du polymère thermodurcissable,
   déposé sur l'empilement sec initial de plis de renfort fibreux, conduisant à la réticulation du polymère thermodurcissable et à sa pénétration dans une partie de l'épaisseur de l'empilement,
   **c-** réaliser un refroidissement, conduisant à l'obtention d'une partie moulée comprenant l'ensemble de fibres de renfort intégré dans le polymère thermodurci, formant matrice, avec une pénétration du polymère thermodurci dans une partie de l'épaisseur de l'empilement à partir de la surface de l'empilement sur laquelle la partie moulée est apposée, ladite partie moulée se retrouvant ainsi liée, grâce à cette pénétration du polymère thermodurci, à l'empilement de couches de fibres de renfort ainsi obtenu.

Un tel procédé permet de fabriquer des éléments composites intermédiaires selon l'invention, et notamment des éléments composites intermédiaires de forme complexe, les procédés de moulage en compression accompagnés d'un chauffage étant particulièrement adaptés à la réalisation d'éléments de forme complexe. Les caractéristiques du procédé de fabrication sont donc choisies pour obtenir les éléments composites intermédiaires selon l'invention, et sont donc adaptées aux caractéristiques de ces derniers.

Dans ce procédé de fabrication, il est possible que l'ensemble de fibres de renfort préimprégné d'un polymère thermodurcissable apposé à l'étape **a** se trouve sous la forme d'une préforme de la pièce moulée souhaitée.

Selon un mode de réalisation, les plis de renfort fibreux formant l'empilement sec initial utilisé à l'étape **a** sont des tissus de fibres de renfort, associés sur au moins une de leurs faces à une couche poreuse polymérique, la ou les couches poreuses polymériques présentes dans ledit pli représentant au plus 10% de la masse totale dudit pli, de préférence de 0,5 à 10% de la masse totale dudit pli, et préférentiellement de 2 à 6% de la masse totale dudit pli et au moins une couche poreuse polymérique étant intercalée entre deux tissus successifs.

Selon des modes de réalisation préférés, les plis de renfort fibreux formant l'empilement sec initial utilisé à l'étape **a** sont des nappes unidirectionnelles de fibres de renfort, associées sur au moins une de leurs faces à une couche poreuse polymérique, la ou les couches poreuses polymériques présentes dans ledit pli représentant au plus 10% de la masse totale dudit pli, de préférence de 0,5 à 10% de la masse totale dudit pli, et préférentiellement de 2 à 6% de la masse totale dudit pli et au moins une couche poreuse polymérique étant intercalée entre deux nappes unidirectionnelles de fibres de renfort successives.

Dans un tel cas, de manière particulière préférée, les plis de renfort fibreux formant l'empilement sec initial utilisé à l'étape **a** peuvent être constitués d'une nappe unidirectionnelle de fibres de renfort, associée sur chacune de ses faces à une couche poreuse polymérique et les couches poreuses polymériques présentes sur chacune des faces de la nappe unidirectionnelle de fibres de renfort sont identiques.

La ou les couche(s) poreuse(s) polymérique(s) présente(s) dans lesdits plis peut (peuvent) avoir un caractère collant à chaud et l'association de la nappe unidirectionnelle ou du tissu et de ladite au moins une couche poreuse polymérique constituant un pli a été préalablement obtenue grâce au caractère collant à chaud de la couche poreuse polymérique. De tels plis sont classiquement utilisés dans l'art antérieur en tant que renfort sec.

Il est également possible que l'empilement sec initial de plis de renfort fibreux utilisé à l'étape **a,** présente un caractère cohérent obtenu grâce au caractère collant à chaud de la ou des couche(s) poreuse(s) polymérique(s) présente(s). Une telle cohésion facilite sa manipulation et sa mise en oeuvre dans le procédé de fabrication. Dans ce cas, il est également possible que l'empilement sec initial de plis de renfort fibreux utilisé à l'étape **a** soit préformé, notamment lorsqu'il ne s'agit pas simplement d'une plaque plane.

Selon une autre variante, l'empilement sec initial de plis de renfort fibreux utilisé à l'étape **a,** ne présente pas de caractère cohérent, son caractère cohérent étant obtenu à l'issue de l'étape **b,** grâce au caractère collant à chaud de la ou des couche(s) poreuse(s) polymérique(s) présente(s).

De manière avantageuse, la ou les couche(s) poreuse(s) polymérique(s) éventuellement présente(s) dans lesdits plis de l'empilement sec initial utilisé à l'étape **a** comprend(nent) ou est(sont) constituée(s) d'un polymère thermoplastique ou d'un polymère comprenant une part thermoplastique.

En particulier, la ou les couche(s) poreuse(s) polymérique(s) présente(s) dans lesdits plis de l'empilement sec initial utilisé à l'étape **a** est(sont) un film poreux, une grille, un dépôt de poudre, un tissu ou, de préférence, un non-tissé ou voile.

Selon une autre variante, les plis de renfort fibreux formant l'empilement sec initial sont des nappes unidirectionnelles de fibres de renfort orientées selon au moins deux directions différentes, liées par couture ou tricotage. Dans ce cas, l'empilement sec peut être formé de plusieurs NCF, chaque NCF étant un ensemble de plusieurs nappes unidirectionnelles orientées selon au moins deux directions différentes, une ou plusieurs couche(s) poreuse(s) polymérique(s) pouvant être présente(s) en surface ou entre les nappes unidirectionnelles, ledit ensemble étant lié par couture ou tricotage. De manière classique dans le domaine des NCF, la couture ou le tricotage peut être assuré par des fils de verre, de carbone, de basalte, de silice, de polyester ou des fils en un polymère thermoplastique, notamment des fils en un polymère thermoplastique présentant un titre dans la gamme allant de 5 à 150 dTex, et préférentiellement dans la gamme allant de 5 à 30 dTex.

Dans le procédé de fabrication selon l'invention, les fibres des plis de renfort fibreux de l'empilement sec et/ou de l'ensemble de fibres de renfort préimprégné sont, en général, des fibres de verre, de carbone, d'aramide ou de céramique, les fibres de carbone étant particulièrement préférées.

Selon un mode de réalisation, notamment parfaitement adapté à la réalisation d'éléments moulés de forme complexe, les fibres de renfort préimprégnées d'un polymère thermodurcissable constituant l'ensemble destiné à former la partie moulée, sont des morceaux de fibres unidirectionnelles imprégnés d'un polymère thermodurcissable, qui, de préférence, forment un tapis intermédiaire dans lequel les morceaux sont disposés de façon aléatoire. De manière avantageuse, les morceaux sont rectangulaires ou sensiblement rectangulaires, et présentent, de préférence, une longueur de 1 cm à 10 cm, une largeur de 2 mm à 2 cm et une épaisseur de 0,02 mm à 0,50 mm.

De manière préférée, le polymère thermodurcissable de l'ensemble destiné à former la partie moulée est une époxy. En général, le polymère thermodurcissable de l'ensemble destiné à former la partie moulée représente au moins 25 % en masse dudit ensemble, de préférence de 25 à 55% en masse dudit ensemble.

Dans le cadre de l'invention, l'étape **b** de moulage en compression entraine la diffusion du polymère thermodurcissable, qui, au final dans son état thermodurci, pénètre dans une partie de l'épaisseur de l'empilement au niveau de l'interface avec la partie moulée. Le plus souvent, l'empilement sec de couches de fibres de renfort obtenu présente une épaisseur moyenne d'au moins 5 mm et le polymère thermodurci pénètre dans une partie de l'épaisseur de l'empilement à partir de la surface de l'empilement selon une profondeur moyenne de pénétration d'au moins 2 mm. Les conditions de l'opération de moulage, en particulier la pression, la température et le temps utilisés seront adaptés, par l'homme du métier, pour obtenir une telle pénétration.

En général, à l'étape **a,** l'empilement sec initial de plis de renfort fibreux comporte de 4 à 20 plis, de préférence de 8 à 16 plis, et, de manière avantageuse, à l'issue de l'étape **b,** au moins 2, de préférence au moins 4 couches de fibres de renfort de l'empilement sec obtenu ne comportent pas de polymère thermodurci ayant pénétré depuis la partie moulée.

Selon des modes de réalisation particuliers, l'empilement sec utilisé à l'étape **a** présente, au moins au niveau de la surface sur laquelle l'ensemble de fibres de renfort préimprégné du polymère thermodurcissable est apposé, des découpes ou des perforations. De telles découpes ou perforations permettent de favoriser l'accroche de l'ensemble de fibres de renfort préimprégné, sur l'empilement sec et, au final, la liaison entre les deux parties constituant l'élément composite intermédiaire final obtenu.

Dans certains modes de réalisations, applicables quelle que soit la variante du procédé de fabrication, un moule de forme appropriée est utilisé à l'étape **b,** pour obtenir une partie moulée de forme complexe, par rapport à la forme de l'empilement.

En particulier, dans le cadre de l'invention, l'élément composite intermédiaire obtenu est destiné à former une charnière, un point d'accroche, une nervure, une poutre nervurée, un support, une console, un canal, une attache, une chape, un raidisseur, un encadrement de trappe, un encadrement de porte, un bras de levier, une embase, une ferrure, une jointure, un emboitement ou un pivot.

L'invention a également pour objet l'utilisation d'un élément composite intermédiaire selon l'invention ou d'un élément composite intermédiaire obtenu selon le procédé de fabrication décrit dans le cadre de l'invention, pour la réalisation d'une pièce composite, en combinaison avec une résine thermodurcissable, thermoplastique ou un mélange de telles résines. De tels procédés sont dits directs. La résine ou le mélange de résines utilisé(e) est infusé(e) ou injecté(e) dans l'empilement sec de l'élément composite intermédiaire, ladite infusion ou injection étant suivie d'un refroidissement, l'utilisation d'une résine thermodurcissable et d'un mélange de résines thermodurcissables étant préférée. Dans le cas de l'utilisation d'une résine thermodurcissable ou d'un mélange contenant une résine thermodurcissable, l'infusion ou l'injection est menée dans des conditions conduisant à la réticulation de la résine thermodurcissable.

L'invention a donc aussi pour objet les procédés dits directs de réalisation d'une pièce composite, utilisant un élément composite intermédiaire décrit dans le cadre de l'invention.

Dans de tels procédés, de manière avantageuse, l'élément composite intermédiaire est utilisé avec d'autres renforts secs. Selon une première variante préférée, l'invention concerne un procédé de fabrication d'une pièce composite comprenant les étapes suivantes :
**A1-** disposer d'un élément composite intermédiaire selon l'invention ou d'un élément composite intermédiaire obtenu selon le procédé de fabrication selon l'invention,
**A2-** apposer ledit élément composite intermédiaire sur au moins une partie de la surface d'un empilement sec de plis de renfort fibreux, nommé empilement sec additionnel, de manière à ce que l'empilement sec de l'élément composite intermédiaire, vienne appuyer contre l'empilement sec additionnel,
**A3-** infuser ou injecter une résine thermodurcissable, thermoplastique ou un mélange de telles résines, à la fois dans l'empilement sec de l'élément composite intermédiaire et dans l'empilement sec additionnel, dans des conditions conduisant à sa réticulation dans le cas de l'utilisation d'une résine thermodurcissable, ladite infusion ou injection étant suivie d'un refroidissement permettant d'obtenir la pièce composite finale souhaitée.

Dans le cadre de l'invention, il y a une très bonne liaison entre l'élément composite intermédiaire et l'empilement sec additionnel, puisque cette liaison est du même type et est assurée par la résine qui est infusée/injectée d'une part dans l'empilement sec de l'élément composite intermédiaire et dans l'empilement sec additionnel. Cette liaison est assurée sur toute la surface de l'élément composite intermédiaire, au contact de l'empilement sec additionnel. Ceci, en plus de la liaison obtenue grâce à la pénétration du polymère formant la partie moulée dans l'empilement sec de l'élément composite intermédiaire, conduit à une pièce qui présente une bonne liaison à l'interface des différentes parties qui la constituent. De ce fait, il n'est pas nécessaire de compléter ces liaisons par une liaison mécanique additionnelle. Aussi, de manière avantageuse, dans le cadre de l'invention, dans la pièce composite finale, la liaison entre les éléments de la pièce correspondant à la partie moulée et l'empilement sec de l'élément composite intermédiaire, pas plus que celle entre l'élément composite intermédiaire et l'empilement sec additionnel, ne sont assurées par un organe de fixation mécanique, du type rivet, vis...

Il est possible que les plis de renfort fibreux constituant l'empilement sec additionnel soient identiques structurellement, à ceux constituant l'empilement sec de l'élément composite intermédiaire. Bien qu'un tel choix facilite la compatibilité entre l'empilement sec additionnel et l'élément composite intermédiaire et peut favoriser la liaison à l'interface, ceci n'est pas obligatoire. En effet, différents types de renforts secs liés par infusion/injection de résine conduisent, en général, à une très bonne cohésion/liaison à l'interface des deux types de renfort.

De plus, le procédé selon l'invention est particulièrement avantageux, puisqu'il permet de réaliser un élément composite intermédiaire de dimension plus petite et de forme plus complexe selon une technique dite indirecte, notamment par moulage en compression et d'apposer cette pièce sur un empilement sec additionnel, de plus grande dimension, et ensuite de mettre en oeuvre un procédé dit direct, nécessitant un autre dispositif, par exemple du type bâche à vide, pour réaliser la pièce composite finale.

Aussi, selon certains modes de réalisation de l'invention, l'élément composite intermédiaire présente une forme complexe, par rapport à la forme de l'empilement sec additionnel. En particulier, l'élément composite intermédiaire constitue dans la pièce composite finale obtenue, une charnière, un point d'accroche, une nervure, une poutre nervurée, un support, une console, un canal, une attache, une chape, un raidisseur, un encadrement de trappe, un encadrement de porte, un bras de levier, une embase, une ferrure, une jointure, un emboitement ou un pivot.

De manière avantageuse, l'empilement sec additionnel présente au moins une dimension supérieure à au moins une dimension de l'élément composite intermédiaire, notamment au moins 2 fois, de préférence, au moins 4 fois égale à au moins une dimension de l'élément composite intermédiaire. En particulier, l'empilement sec additionnel présente une surface au moins dix fois égale à la surface sur laquelle l'élément composite intermédiaire est apposée.

Dans le cadre de l'invention, l'empilement sec additionnel utilisé à l'étape **A2** peut être préformé.

Par ailleurs, de manière avantageuse, la surface de l'empilement sec additionnel sur laquelle l'élément composite intermédiaire est apposée présente une ou plusieurs irrégularités de surface, du type nervure ou protubérance, qui peut (peuvent) notamment être obtenue(s) par un préformage préalable de l'empilement sec additionnel. Dans ce cas, la présence de l'empilement sec de l'élément composite intermédiaire à l'interface avec l'empilement sec additionnel, qui a une capacité de déformation plus importante qu'une pièce moulée, va permettre un ajustement de la position relative de l'élément composite intermédiaire et de l'empilement sec additionnel moins strict. Un calage moins contraignant et donc un accostage plus rapide que dans le cas de l'assemblage direct avec une pièce moulée peuvent être adoptés. L'association/assemblage de ces deux éléments est donc facilité.

Bien que ceci ne constitue pas la variante préférée de l'invention il est également possible que l'élément composite intermédiaire soit utilisé, sans élément de renfort additionnel, dans un procédé direct. Aussi, l'invention a également pour objet un procédé de fabrication d'une pièce composite comprenant les étapes suivantes :
**B1-** disposer d'un élément composite intermédiaire selon l'invention ou d'un élément composite intermédiaire obtenu selon le procédé décrit dans le cadre de l'invention,
**B2-** infuser ou injecter une résine thermodurcissable, thermoplastique ou un mélange de telles résines dans l'empilement sec de l'élément composite intermédiaire, dans des conditions conduisant à sa réticulation dans le cas de l'utilisation d'une résine thermodurcissable, suivie d'un refroidissement permettant d'obtenir la pièce composite finale souhaitée.

Bien entendu, dans les procédés de fabrication de pièces composites selon l'invention, les mêmes caractéristiques que celles décrites en lien avec les éléments composites intermédiaires ou leurs procédés de fabrication sont de préférence appliquées, notamment pour la partie moulée, et/ou les empilements secs.

De manière avantageuse, une résine thermodurcissable, et en particulier une résine époxy, est injectée ou infusée, respectivement à l'étape **A3** ou **B2** des procédés de fabrication de pièces composites.

De manière classique pour l'homme du métier, l'étape **A3** ou **B2,** respectivement, peut être réalisée par infusion, de préférence, dans un moule ouvert, par exemple par infusion sous bâche à vide.

L'invention a également pour objet les pièces composites susceptibles d'être obtenues selon l'un des procédés de fabrication de pièces composites décrits dans le cadre de l'invention.

De telles pièces correspondent, en particulier, à des pièces composites utilisées dans le domaine de l'aéronautique, de l'automobile, du spatial, de la défense, de l'industrie ou de l'énergie. L'invention est particulièrement adaptée à la réalisation de pièce de forme complexe en trois dimensions.

L'invention sera mieux comprise à partir de la description détaillée qui va suivre, par référence aux figures annexées.

### Brève description des Figures

[Fig. 1] La **figure 1** est une vue schématique en coupe d'un élément composite intermédiaire conforme à l'invention.
[Fig. 2] La **figure 2** est une vue schématique en coupe d'une pièce composite conforme à l'invention.
[Fig. 3] La **figure 3** illustre schématiquement les étapes de fabrication d'un élément composite intermédiaire conforme à l'invention.
[Fig. 4] La **figure 4** illustre schématiquement les étapes de fabrication d'une pièce composite à partir d'un élément composite intermédiaire conforme à l'invention, selon la première variante de procédé de fabrication d'une pièce composite conforme à l'invention.
[Fig. 5] La **figure 5** illustre schématiquement les étapes de fabrication d'une pièce composite à partir d'un élément composite intermédiaire conforme à l'invention, selon la deuxième variante de procédé de fabrication d'une pièce composite conforme à l'invention.
[Fig. 6A] La **figure 6A** présente schématiquement, selon une vue en perspective, un élément composite intermédiaire de forme complexe et un empilement sec additionnel (représenté que partiellement), mis en forme avec une série de nervures.
[Fig. 6B] La **figure 6B** présente ces deux mêmes éléments avec l'élément composite intermédiaire apposé sur l'empilement sec additionnel et ce avant l'addition de résine pour la formation de la pièce finale.
[Fig. 6C] La **figure 6C** est une présentation, après grossissement, d'une partie de l'élément composite intermédiaire, faisant apparaitre l'interface entre la partie moulée et l'empilement sec et la pénétration, dans une partie de l'épaisseur de l'empilement sec, du polymère thermodurci formant, par ailleurs, la matrice de la partie moulée.
[Fig. 7] La **figure 7** présente une photographie correspondant à une vue en coupe partielle d'un élément composite intermédiaire, mettant en évidence la pénétration du polymère constituant la matrice de la partie moulée dans l'empilement sec.

### Elément composite intermédiaire

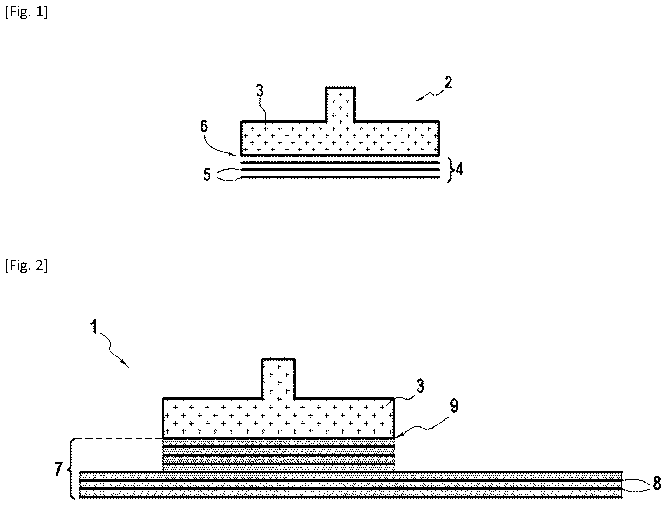

Selon un premier de ses aspects, l'invention concerne un élément composite intermédiaire, destiné à la réalisation de pièces composites, en combinaison avec une résine injectée ou infusée. Un élément composite intermédiaire **2** selon l'invention est illustré schématiquement **figure 1** : il comprend au moins une partie moulée, et dans l'exemple illustré une seule partie moulée **3,** et au moins un empilement sec, et dans l'exemple illustré un seul empilement sec **4** de couches fibreuses **5,** la partie moulée **3** et l'empilement sec **4** étant liés l'un à l'autre. La partie moulée **3** est positionnée sur l'une des grandes faces de l'empilement fibreux sec **4.** L'interface **6,** correspondant à la zone de liaison entre la partie moulée **3** et l'empilement sec **4,** peut correspondre à toute la surface de la face de l'empilement sec **4** sur laquelle la partie moulée **3** est disposée, comme c'est le cas dans l'exemple illustré **figure 1****,** mais pourrait également ne correspondre qu'à une partie de cette surface.

La partie moulée **3** est constituée d'une matrice en un ou plusieurs polymère(s) thermodurci(s), dans laquelle des fibres de renfort sont réparties. Dans le cadre de l'invention, lorsqu'il est question de polymère thermodurci, on entend un polymère totalement thermodurci, voire un polymère thermodurci avec un taux de thermodurcissement incomplet. En particulier, il est possible que le thermodurcissement ne soit atteint qu'à un taux inférieur à 100%, mais en général, supérieur à 70%. Aussi, dans la partie moulée, le polymère thermodurci pourra encore comprendre des fonctions thermoréticulables, mais le polymère conservera un caractère thermodurci, c'est-à-dire qu'il ne peut pas revenir à son caractère liquide ou pâteux initial, même lorsqu'il est soumis à un chauffage.

La matrice polymérique thermodurcie est obtenue par polymérisation/réticulation d'un polymère thermodurcissable ou d'un mélange de polymères thermodurcissables. Cette partie moulée provient d'un moulage en compression d'un ensemble de fibres de renfort préimprégné d'un polymère thermodurcissable ou d'un mélange de polymères thermodurcissables. Les fibres de renfort sont, classiquement, des fibres de verre, de carbone, d'aramide, des fibres céramiques, les fibres de carbone étant particulièrement préférées. Les fibres de renfort peuvent se trouver sous tout type d'agencement bien connu de l'homme du métier et utilisé pour la conception de pièces composites moulées. Il peut s'agir de tissus, non-tissés, nappes unidirectionnelles de fibres, ou de préférence, de fibres coupées ou de morceaux constitués de fibres unidirectionnelles. En particulier, des morceaux de fibres unidirectionnelles imprégnés d'un polymère thermodurcissable peuvent avoir été utilisés pour la réalisation de la partie moulée. L'utilisation de tels morceaux autorise un bon fluage et est particulièrement adaptée à la réalisation de pièces moulées complexes. Notamment, la partie moulée peut être réalisée à partir de morceaux rectangulaires ou sensiblement rectangulaires, présentant, de préférence, une longueur de 1 cm à 10 cm, une largeur de 2 mm à 2 cm et une épaisseur de 0,02 mm à 0,50 mm. De tels morceaux de fibres unidirectionnelles imprégnés d'un polymère thermodurcissable sont notamment obtenus par imprégnation d'une mèche de fibres unidirectionnelles qui est ensuite découpée ou encore par découpe d'une nappe imprégnée de fibres unidirectionnelles. De tels morceaux peuvent ensuite être posés à plat de manière aléatoire et pressés en feuille, pour former un tapis intermédiaire. De tels tapis intermédiaires préparés à partir de morceaux de fibres unidirectionnelles imprégnés correspondent, par exemple, aux matériaux HexMC^{®} commercialisés par la société Hexcel Corporation (Stamford USA). Dans le cas de l'utilisation de morceaux constitués de fibres unidirectionnelles, au sein de la partie moulée, les fibres unidirectionnelles de renfort formant les morceaux sont orientées de manière aléatoire dans les trois dimensions si les morceaux ont été disposés en vrac avant l'opération de moulage en compression, ou bien sont orientées de manière aléatoire majoritairement dans seulement deux dimensions, dans le cas où les morceaux ont été agencés en tapis intermédiaires qui sont empilés et soumis à l'opération de moulage en compression.

La matrice thermodurcie peut correspondre à tout type de polymère thermodurcissable dans un état thermodurci, à savoir une résine époxy, phénolique, bismaléimide ou cyanate, ou un mélange de telles résines, les résines époxy étant préférées. La partie moulée contient la quantité de polymère thermodurci souhaitée dans les pièces composites finales. En particulier, la matrice polymérique thermodurcie représente au moins 25 % en masse de la partie moulée, de préférence de 25 à 55% en masse de la partie moulée.

L'empilement sec **4,** quant à lui, est formé d'un ensemble de couches **5** de fibres de renfort, lesdites couches étant positionnées les unes sur les autres. L'empilement sec **4** a un caractère cohérent, c'est-à-dire que les couches **5** de fibres de renfort qui le constituent, sont liées entre elles. L'empilement est qualifié de « sec » car, pour la fabrication d'une pièce composite, il doit être associé à une résine thermoplastique ou thermodurcissable, ou à un mélange de telles résines, et en particulier à une résine thermodurcissable. Néanmoins, l'empilement sec pourra également comprendre une part polymérique, mais cette dernière représentera au plus 15%, de préférence au plus 10% de la masse totale de l'empilement sec, et représentera de préférence de 0,5 à 10%, et préférentiellement de 2 à 6% de la masse totale de l'empilement sec. Cette part polymérique peut être un polymère thermodurcissable, notamment une époxy, un polymère thermoplastique, un polymère comprenant une part thermoplastique ou un mélange de tels polymères. La part polymérique se trouve notamment sous la forme d'une ou plusieurs couches poreuses intercalées entre deux couches **5** de fibres de renfort . Elle peut également comprendre une ou plusieurs couches poreuses positionnée(s) en surface de l'empilement sec **4,** et/ou des fils de couture ou tricotage. De manière avantageuse, l'empilement sec **4** contient une part polymérique qui permet d'assurer la cohésion des couches **5** de fibres de renfort, et donne son caractère unitaire à l'empilement sec **4.**

Les couches fibreuses **5** de l'empilement sec **4** peuvent être tout type de couches de fibres de renfort adaptées à la réalisation de pièces composites par procédé direct, notamment des tissus, des non-tissés, des nappes unidirectionnelles. De manière préférée, les couches de fibres de renfort **5** formant l'empilement sec **4** sont toutes des tissus de fibres de renfort, ou de manière encore plus préférée, sont toutes des nappes unidirectionnelles de fibres de renfort.

Au sein de l'empilement sec **4,** les couches fibreuses **5** peuvent être différentes ou, de préférence, sont toutes identiques. Là encore, les fibres de renfort des couches fibreuses **5** sont, classiquement, des fibres de verre, de carbone, d'aramide, des fibres céramiques, les fibres de carbone étant particulièrement préférées. Dans le cadre de l'invention, l'empilement sec **4** comprend une ou des couches poreuses polymériques qui sont intercalées entre les couches **5** de fibres de renfort, notamment pour assurer la cohésion de l'empilement grâce au caractère collant à chaud dudit polymère. Il est également possible que la cohésion de l'empilement soit assurée ou partiellement assurée par des fils de couture ou tricotage, venant lier entre elles les différentes couches fibreuses de l'empilement ou au moins certaines d'entre elles.

Par « couche poreuse », on entend une couche perméable permettant de laisser passer un liquide tel qu'une résine qui serait injectée ou infusée au travers de l'empilement le contenant, lors de la constitution d'une pièce composite. En particulier, le facteur d'ouverture d'une telle couche déterminé selon la méthode décrite dans la demande WO 2011/086266, appartient à la gamme allant de 1 à 70 %, de préférence à la gamme allant de 30 à 60 %. A titre d'exemple de couche poreuse, on peut citer les films poreux, les grilles réalisées par entrecroisement de fils, les couches obtenues par dépôt de poudre, les tissus et les non-tissés. La couche poreuse est dite polymérique, car elle est composée d'un polymère ou mélange de polymères. En particulier, la couche poreuse polymérique peut être en un ou plusieurs polymères thermoplastiques, en un ou plusieurs polymères thermodurcissables ou en un mélange de polymères thermodurcissables ou thermoplastiques. A titre d'exemple de polymère thermoplastique classiquement utilisé dans un empilement sec (et donc pour la constitution du ou des couches poreuses présentes), on peut citer ceux choisis parmi : les Polyamides (PA : PA6, PA12, PA11, PA6,6, PA 6,10, PA 6,12, ...), Copolyamides (CoPA), les Polyamides - block éther ou ester (PEBAX, PEBA), polyphtalamides (PPA), les Polyesters (Polyéthylène téréphtalate -PET-, Polybutylène téréphtalate - PBT-...), les Copolyesters (CoPE), les polyuréthanes thermoplastiques (TPU), les polyacétales (POM...), les Polyoléfines (PP, HDPE, LDPE, LLDPE....), Polyéthersulfones (PES), les polysulfones (PSU...), les polyphénylènes sulfones (PPSU...), PolyétherétherCétones (PEEK), PolyétherCétoneCétone (PEKK), Poly(Sulfure de Phénylène) (PPS), Polyétherimides (PEI), les polyimides thermoplastiques, les polymères à cristaux liquides (LCP), les phénoxys, les copolymères à blocs tels que les copolymères Styrène-Butadiene-Méthylméthacrylate(SBM), les copolymères Méthylméthacrylate-Acrylate de Butyl-Méthylméthacrylate (MAM) et leurs mélanges. Il est également possible que la couche poreuse polymérique soit composée ou contienne un polymère thermoplastique partiellement réticulé, comme décrit dans la demande WO 2019/102136. Le choix du ou des polymères constitutifs de la part polymérique de l'empilement sec sera ajusté par l'homme du métier, en fonction du choix de la résine qui sera injectée ou infusée, lors de la réalisation ultérieure des pièces composites. De manière avantageuse, la part polymérique de l'empilement sec (et donc la ou les couche(s) poreuse(s) polymérique(s) présente(s) dans ce dernier) comprend ou est constituée d'un polymère thermoplastique ou d'un polymère comprenant une part thermoplastique ou d'un mélange de tels polymères.

Pour former l'élément composite intermédiaire **2,** la partie moulée **3** et l'empilement sec **4** sont liés l'un à l'autre. Au niveau de l'interface **6** existant entre la partie moulée **3** et l'empilement sec **4,** la liaison est assurée grâce à la matrice thermodurcie qui pénètre dans l'empilement sec **4.** La part polymérique présente dans l'empilement sec, qui peut également être présente au niveau de l'interface **6,** pourra également contribuer à assurer cette liaison.

Dans le cadre de l'invention, la liaison entre la partie moulée **3** et l'empilement sec **4** est renforcée par le fait que la matrice thermodurcie pénètre dans une partie de l'épaisseur de l'empilement à partir de la surface **6** de l'empilement sur laquelle la partie moulée est apposée, ce qui renforce la liaison entre l'empilement et la partie moulée. Cette pénétration intervient lors de la réalisation de l'élément composite intermédiaire **2,** comme expliqué ci-après.

De manière avantageuse, dans l'élément composite intermédiaire, l'empilement sec **4** comprend au moins deux couches **5** de fibres de renfort et le polymère thermodurci pénètre dans au moins deux couches **5** de fibres de renfort de l'empilement sec **4.** En particulier, l'empilement sec **4** comporte de 4 à 20 couches **5** de fibres de renfort, de préférence de 8 à 16 couches **5** de fibres de renfort et le polymère thermodurci pénètre dans au moins deux couches **5** de fibres de renfort de l'empilement sec **4,** de préférence au moins 4 couches **5** de fibres de renfort de l'empilement sec **4.**

### Procédé de fabrication de l'élément composite intermédiaire

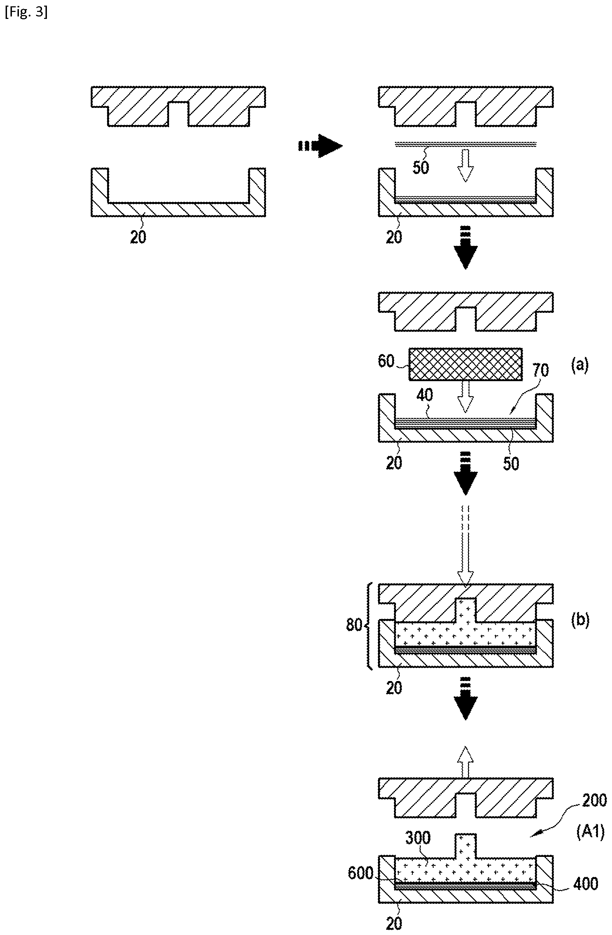

Un procédé de fabrication d'un élément composite intermédiaire selon l'invention est illustré **figure 3****.** Il comprend les étapes successives suivantes :
**a-** apposer au moins un ensemble **60** de fibres de renfort préimprégné d'un polymère thermodurcissable, sur une zone de surface **70** d'un empilement sec initial **40** de plis **50** de renfort fibreux,
**b-** réaliser, dans un moule **80,** une opération de moulage en compression à chaud de l'ensemble **60** de fibres de renfort préimprégné du polymère thermodurcissable, déposé sur l'empilement sec **40** de plis de renfort fibreux, conduisant à la réticulation du polymère thermodurcissable et à sa pénétration dans une partie de l'épaisseur de l'empilement,
**c-** réaliser un refroidissement, conduisant à l'obtention d'une partie moulée **300** comprenant l'ensemble de fibres de renfort intégré dans une matrice, correspondant au polymère thermodurcissable qui a thermodurci, ladite partie moulée se retrouvant alors également liée, par l'intermédiaire du polymère thermodurci ayant pénétré, à l'empilement **400** de couches de fibres de renfort ainsi obtenu.

L'opération de moulage peut être réalisée selon toute technique conventionnelle bien connue de l'homme du métier. Les différents éléments : ensemble **60** de fibres de renfort imprégné d'un polymère thermodurcissable et empilement sec initial **40** de plis **50** de renfort fibreux sont tous soumis à l'opération de moulage en compression, comme illustré sur la **figure 3****.**

Pour cela, de manière classique, les différents éléments sont positionnés dans un moule **20** ou une partie de moule ouvert. Il est possible que l'empilement sec initial **40** de plis **50** de renfort fibreux soit directement formé dans le moule par dépose des plis individuellement ou bien que l'empilement sec initial **40** soit déjà formé préalablement et déposé en une seule opération dans le moule.

De même, l'ensemble **60** de fibres de renfort préimprégné d'un polymère thermodurcissable peut être directement formé dans le moule par dépose des préimprégnés sélectionnés, sur l'empilement sec initial **40** ou bien l'ensemble **60** de fibres de renfort préimprégné d'un polymère thermodurcissable peut avoir été formé préalablement, sous la forme d'une préforme et déposé en une seule opération sur l'empilement sec initial **40,** déjà présent dans le moule **20.**

A titre d'exemple, l'ensemble **60** de fibres de renfort préimprégné peut correspondre à un ensemble préimprégné de fibres longues, de fibres courtes, discontinues, notamment à un empilement de matériaux préimprégnés en feuille de fibres de renfort, en particulier sous la forme de tissus préimprégnés ou de nappes unidirectionnelles préimprégnées, de BMC (de l'anglais « Bulk Molding Compound ») ou SMC (de l'anglais « Sheet Molding Compound »). Des tissus préimprégnés et des nappes unidirectionnelles préimprégnées sont notamment disponibles dans la gamme HexPly^{®}, chez Hexcel Corporation (Stamford USA).

De manière avantageuse, l'ensemble **60** de fibres de renfort préimprégné de polymère thermodurcissable peut être réalisé à partir de morceaux rectangulaires ou sensiblement rectangulaires, présentant, de préférence, une longueur de 1 cm à 10 cm, une largeur de 2 mm à 2 cm et une épaisseur de 0,02 mm à 0,50 mm. De tels morceaux de fibres unidirectionnelles imprégnés d'un polymère thermodurcissable sont notamment obtenus par imprégnation d'une mèche de fibres unidirectionnelles qui est ensuite découpée ou encore par découpe d'une nappe imprégnée de fibres unidirectionnelles. De tels morceaux peuvent ensuite être posés à plat de manière aléatoire et pressés en feuille, pour former un tapis intermédiaire. De tels tapis intermédiaires préparés à partir de morceaux de fibres unidirectionnelles imprégnés correspondent, par exemple, aux matériaux HexMc^{®} commercialisés par la société Hexcel Corporation (Stamford USA). Dans le cas de l'utilisation de morceaux constitués de fibres unidirectionnelles, au sein de la partie moulée, les fibres unidirectionnelles de renfort formant les morceaux sont orientées de manière aléatoire dans les trois dimensions si les morceaux ont été disposés en vrac avant l'opération de moulage en compression, ou bien sont orientées de manière aléatoire majoritairement dans seulement deux dimensions, dans le cas où les morceaux ont été agencés en tapis intermédiaires qui sont empilés et soumis à l'opération de moulage en compression. Les conditions de thermocompression, et des cycles de cuisson adaptés à ce type de matériaux sont, par exemple, décrits dans la demande WO 2016/207309, à laquelle on pourra se référer pour plus de détails.

Par « plis de renfort fibreux », on entend un matériau composé d'une ou plusieurs couches, le dit matériau présentant un caractère unitaire ou cohérent, c'est-à-dire que les différentes couches sont liées entre elles. Au sein d'un pli 50 de renfort fibreux, au moins une couche de fibres de renfort est présente. Une telle couche de fibres de renfort, peut se présenter notamment sous la forme d'un tissu, d'une nappe unidirectionnelle ou d'un non-tissé, de fibres de renfort. Selon des modes de réalisation préférés, chaque pli comprendra une nappe unidirectionnelle de fibres de renfort et ces différentes nappes de fibres de renfort unidirectionnelles seront orientées selon des directions différentes, dans l'empilement sec **40,** comme cela est classiquement utilisé dans le domaine.

Il est également possible d'utiliser des plis dans lesquels la couche de fibres de renfort est un tissu.

L'empilement sec **40** va correspondre dans l'élément composite intermédiaire 2 à l'empilement sec **4** et peut donc être considéré comme un empilement précurseur de ce dernier. Ainsi, l'empilement sec initial **40** de plis **50** de renfort fibreux, comprend au moins une couche poreuse polymérique intercalée entre deux couches de fibres de renfort.

Les fibres de renfort sont, en particulier, des fibres de verre, de carbone, d'aramide, des fibres céramiques, les fibres de carbone étant particulièrement préférées. Un pli **50** de renfort fibreux peut également contenir une part polymérique, mais en quantité faible pour préserver le caractère sec de l'empilement sec initial **40.** En particulier, si un pli de renfort fibreux présente une part polymérique, cette dernière représentera au plus 15%, de préférence au plus 10% de la masse totale du pli de renfort fibreux, et représentera de préférence de 0,5 à 10%, et préférentiellement de 2 à 6% de la masse totale du pli de renfort fibreux. Si une part polymérique est liée au renfort fibreux, on considère qu'elle appartient au pli de renfort fibreux. Dans ce cas, le pli de renfort fibreux pourra, en particulier, comprendre une couche de fibres de renfort et une couche poreuse polymérique qui sont solidaires (associées) l'une à l'autre. Si une part polymérique n'est pas solidaire du pli de renfort fibreux, certes elle appartient à l'empilement sec initial **40,** mais on considère qu'elle est déposée sur un pli de renfort fibreux ou intercalée entre deux plis de renfort fibreux. Ainsi, l'empilement sec **40** comprend soit au moins une couche poreuse polymérique intercalée entre deux plis successifs **50** ou bien au moins une couche poreuse polymérique, qui appartient à un pli **50** et qui est positionnée au contact d'un autre pli **50,** dans l'empilement sec **40.** Par ailleurs, au final, l'empilement sec initial **40** comporte une part polymérique, qui représentera au plus 15%, de préférence au plus 10% de la masse totale du pli de renfort fibreux, et représentera de préférence de 0,5 à 10%, et préférentiellement de 2 à 6% de sa masse totale.

Selon une première variante de mise en oeuvre, les plis **50** de renfort fibreux formant l'empilement sec initial **40** sont des renforts fibreux, en particulier des nappes unidirectionnelles de fibres de renfort, associés sur au moins une de leurs faces à une couche poreuse polymérique, la ou les couches poreuses polymériques présentes dans ledit pli représentant au plus 10% de la masse totale dudit pli, de préférence de 0,5 à 10% de la masse totale dudit pli, et préférentiellement de 2 à 6% de la masse totale dudit pli, avec au moins une couche poreuse polymérique qui est intercalée entre deux renforts fibreux successifs, et en particulier deux nappes unidirectionnelles de fibres de renfort successives.

Il est également possible que les plis **50** de renfort fibreux formant l'empilement sec initial **40** soient des tissus de fibres de renfort, associés sur au moins une de leurs faces à une couche poreuse polymérique, la ou les couches poreuses polymériques présentes dans ledit pli représentant au plus 10% de la masse totale dudit pli, de préférence de 0,5 à 10% de la masse totale dudit pli, et préférentiellement de 2 à 6% de la masse totale dudit pli, avec au moins une couche poreuse polymérique qui est intercalée entre deux tissus successifs.

Par « renfort fibreux associé sur au moins une de ses faces à une couche poreuse », on entend que le renfort fibreux est lié à au moins une couche poreuse qui est apposée sur une des faces de ce dernier. Une telle liaison aura, en particulier, été réalisée par collage, notamment réalisée grâce au caractère collant à chaud de la couche poreuse polymérique. Il est également possible, notamment dans le cas d'un empilement comprenant plusieurs renforts fibreux et plusieurs couches poreuses polymériques, que cette liaison soit complétée ou remplacée par une liaison mécanique du type couture, tricotage, ou par tout autre moyen physique (aiguilletage...).

En particulier, la couche poreuse polymérique est un non-tissé. Par « non-tissé », qui peut également être nommé « voile », on entend classiquement un ensemble de fibres continues ou courtes disposées aléatoirement. Ces non-tissés ou voiles peuvent, par exemple, être produits par les procédés voie sèche (« Drylaid »), voie humide (« Wetlaid »), par voie fondue (« Spunlaid »), par exemple par extrusion (« Spunbond »), extrusion soufflage («Meltblown »), par projection fondue (« fiberized spray applicator »), ou par filage avec solvant (« electrospinning », « Flashspining », « Forcespinning »), bien connus de l'homme du métier. En particulier, les fibres constitutives du non-tissé peuvent présenter un diamètre moyen compris dans la gamme allant de 0,5 à 70 µm, et préférentiellement de 0,5 à 20 µm. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. Les non-tissés offrent une couverture aléatoire et, de préférence, isotropique.

De manière avantageuse, le ou les non-tissés présent(s) dans l'empilement sec initial **40** a(ont) une masse surfacique comprise dans la gamme allant de 0,2 et 20 g/m². L'épaisseur d'un non tissé dans les matériaux de renfort selon l'invention pourra varier en fonction du mode d'association au renfort fibreux. De façon préférée, le non-tissé ou chacun des non-tissés présents dans l'empilement sec initial **40** a une épaisseur de 0,5 à 50 microns après association au renfort fibreux, de préférence de 3 à 35 microns, lorsque l'association se fait par application de chaleur et d'une pression, pour utiliser le caractère collant à chaud du non-tissé. Lorsque l'association se fait par un moyen mécanique, du type couture, tricotage ou aiguilletage, l'épaisseur du non-tissé pourra être supérieure à 50 microns, notamment dans la gamme allant de 50 à 200 microns. Les caractéristiques de ces non-tissés pourront être déterminées selon les méthodes décrites dans la demande WO 2010/046609.

Des tissus secs porteurs de poudre ou d'un voile polymérique sont notamment disponibles auprès de la société Hexcel dans la gamme HexForce^{®} ou encore on peut citer notamment les tissus poudrés G0926 et les tissus voilés 48302.

De manière préférée, à titre de plis **50** de renfort fibreux, on utilise ceux constitués d'une nappe unidirectionnelle de fibres de renfort correspondant au renfort fibreux, associée sur au moins une de ses faces à une couche poreuse telle que prévue dans le cadre de l'invention. De manière à avoir un matériau symétrique, le renfort fibreux, et en particulier la nappe unidirectionnelle de fibres de renfort, est associé sur chacune de ses faces à une couche poreuse telle que prévue dans le cadre de l'invention et les couches poreuses présentes sur chacune des faces de la nappe unidirectionnelle de fibres de renfort sont, de préférence, identiques. Dans le cadre de l'invention, la couche poreuse présente un caractère collant à chaud et l'association du renfort fibreux et de la couche poreuse sera avantageusement réalisée grâce au caractère collant à chaud de la couche poreuse, de manière à former un pli unitaire. Ce caractère collant résulte du polymère composant la couche poreuse qui, de préférence, sera un polymère thermoplastique, ou un polymère comprenant une part thermoplastique ou un mélange de tels polymères. Si les plis unitaires **50** de renfort fibreux sont préalablement empilés et associés en tant que préforme avant d'être positionné dans le moule, ce caractère collant donnera également le caractère cohérant à l'empilement sec ainsi obtenu.

De tels plis **50** de renfort fibreux sont décrits dans les documents WO 2010/046609, WO 2010/061114, US 2008/7435693, US 2010/003881, EP 1125728, WO 2007/015706, WO 2006/121961 et US 6503856, auxquels on pourra se référer pour plus de détails. Comme dans ces documents, les fils de renfort constitutifs des nappes unidirectionnelles peuvent être non torsadés. Il est également possible d'utiliser des fils de renfort torsadés pour la constitution des nappes unidirectionnelles, avantageusement des fils torsadés individuellement selon une torsion de 3 à 15 tours/m, de préférence de 6 à 12 tours/m.

Selon une deuxième variante de mise en oeuvre, les plis **50** de renfort fibreux formant l'empilement sec initial **40** comprennent plusieurs nappes de fibres de renfort unidirectionnelles orientées selon des directions différentes et liées par couture ou tricotage. En particulier, les plis **50** de renfort fibreux sont constitués d'un empilement de nappes de fibres de renfort unidirectionnelles orientées selon des directions différentes, avec au moins une couche poreuse polymérique, telle que précédemment décrite, intercalée entre deux nappes unidirectionnelles de fibres de renfort, voire également en surface de l'empilement. Selon un premier mode de réalisation de cette deuxième variante, un tel pli de renfort fibreux peut être constitué d'un empilement correspondant à un enchainement (CM/R)ⁿ, avec CM qui désigne une couche poreuse polymérique telle que prévue dans le cadre de l'invention, R un renfort fibreux tel que décrit dans le cadre de l'invention et n désignant un nombre entier, notamment 1, 2 ou 3, avec de préférence toutes les couches CM qui présentent un grammage identique, voire même qui sont identiques.

Selon un deuxième mode de réalisation de cette deuxième variante, un tel pli de renfort fibreux peut être constitué d'un empilement correspondant à un enchainement (CM/R)ⁿ/CM, avec CM qui désigne une couche poreuse polymérique telle que prévue dans le cadre de l'invention, R un renfort fibreux tel que décrit dans le cadre de l'invention et n désignant un nombre entier, notamment 1, 2 ou 3, avec de préférence toutes les couches poreuses CM qui présentent un grammage identique, voire même qui sont identiques, ou les couches poreuses externes ayant un grammage égal au demi-grammage de chacune des couches poreuses internes polymériques.

En particulier, dans de tels empilements, les renforts fibreux R sont des nappes unidirectionnelles de fibres de renfort, et en particulier, de fibres de carbone, de préférence de grammage identique. De tels matériaux sont qualifiés de NCF (de l'anglais « Non-crimp fabric »). De manière classique dans ce domaine des NCF, l'association de nappes unidirectionnelles de fibres de renfort entre elles et avec la ou les couche(s) poreuse(s) présente(s) est réalisée par couture ou tricotage. Bien entendu, il pourra être prévu, de remplacer, voire de compléter cette association par couture ou tricotage, par une adhésion réalisée grâce au caractère collant à chaud de la couche poreuse polymérique, qui, de préférence, sera en un polymère thermoplastique, ou un polymère comprenant une part thermoplastique ou un mélange de tels polymères ou par tout autre moyen du type liaison physique (aiguilletage...).

En particulier, dans le cas des NCF, le pli de renfort fibreux selon l'invention est composé de nappes unidirectionnelles s'étendant selon des orientations différentes choisies parmi les angles 0°, 30°, 45°, 60°, 90°, 120°, 135°. Toutes les nappes peuvent présenter des orientations différentes ou seulement certaines d'entre elles. A titre d'exemple, le pli de renfort fibreux selon l'invention pourra être réalisé selon les empilements suivants : 0°/90°, 90°/0°, 45°/135°, 135/45°, 90°/0°/90°, 0°/90°/0°, 135°/45°/135°, 45°/135°/45°, 0°/,45°/90°, 90°/45°/0°, 45°/0°/90°, 90°/0°/45°, 0°/135°/90°, 90°/135°/0°, 135°/0°/90°, 90°/0°/135°, 45°/0°/135°, 135°/0°/45°, 45°/135°/0°, 0°/135°/45°, 45°/135°/90°, 90°/135°/45°, 135°/45°/0°, 0°/45°/135°, 135°/45°/90°, 90°/45°/,135°, 60°/0°/120°, 120°/0°/60° 30°/0°/150°, 150°/0°/30°, 135°/0°/45°/90°, 90°5°, 45°/135°/0°/90°, 90°/0°/135°/45°, 0°/45°/135°/90°, 90°/135°/45°/90°,90°/135°/0°/45°, 45°/0°/135°/90°, le 0° correspondant à la directiod'avancement de la machine permettant de réaliser le matériau de renfort selon l'invention. Dans le cas d'une association par couture ou tricotage, la direction générale des fils de couture ou tricotage correspondra également, en général, au 0°. La réalisation de tels multiaxiaux est connue et met en oeuvre des techniques classiques par exemple décrites dans l'ouvrage « Textile Structural Composites, Composite Materials Series Volume 3 » de Tsu Wei Chou & Franck.K.Ko, ISBN 0-444-42992-1, Elsevier Science Publishers B.V., 1989, Chapitre 5, paragraphe 3.3 ou dans le brevet FR2761380 qui décrit un procédé et un dispositif pour la réalisation de nappes fibreuses multiaxiales. Notamment, les nappes unidirectionnelles peuvent être constituées avant, ou déposées en ligne, au moment de la constitution du multiaxial. La liaison par couture ou tricotage entre les différentes nappes unidirectionnelles peut être réalisée selon des points de couture ou tricotage, s'étendant sur des lignes parallèles entre elles. Notamment, les points de couture ou tricotage sont espacés, au sein d'une même ligne selon un pas, de préférence identique, de 1 à 20 mm, de préférence de 2 à 12 mm. De même, deux lignes de couture ou tricotage consécutives sont, par exemple, espacées l'une de l'autre de 2 à 50 mm, de préférence de 5 à 15 mm. De préférence, toutes les lignes consécutives de couture d'une série de lignes parallèles entre elles seront espacées d'une distance identique. A titre d'exemple de matériau constitutif du fil de couture particulièrement adapté dans le cadre de l'invention, on peut citer les fils de verre, de carbone, de basalte, de silice, les fils thermoplastiques, notamment en un polymère choisi parle les polyesters (PET), les polypropylènes (PP), les polyéthylènes (PE), les polysulfures de phénylène (PPS), les polyéthylènes naphtalates (PEN), les polymères à cristaux liquides (LCP), les polycétones, les polyamides, et leurs mélanges. Le polyéthylène téréphtalate, polybutylène téréphtalate, polytriméthylène téréphtalate, acide polylactique et leurs copolymères sont des exemples de polyesters pouvant être mis en oeuvre. Le fil présentera, par exemple, un titre dans la gamme allant de 5 à 150 dTex, notamment inférieur à 30 dTex, par exemple déterminé selon la norme EN ISO 2060. Pour plus de détails sur certaines constructions utilisables dans les matériaux de type NCF, on pourra se référer aux documents EP 2 547 816 ou WO 2010/067003 notamment.

Des exemples de NCF sont décrits dans les documents US 8,361,262, US 9,371,604, WO 2011/113751 et EP 2 491 175, auxquels on pourra se référer pour plus de détails. Là encore, comme dans ces documents, les fils de renfort constitutifs des nappes unidirectionnelles peuvent être non torsadés. Il est également possible d'utiliser des fils de renfort torsadés pour la constitution des nappes unidirectionnelles, avantageusement des fils torsadés individuellement selon une torsion de 3 à 15 tours/m, de préférence de 6 à 12 tours/m.

Une fois les différents éléments positionnés dans le moule, l'opération b de moulage en compression à chaud est ensuite réalisée selon toute technique adaptée, bien connue de l'homme du métier. Le but de cette opération est, tout d'abord, de former et consolider, après refroidissement, la partie moulée **300.** La forme obtenue pour la partie moulée **300** correspond à la forme souhaitée qui sera sa forme définitive dans la pièce moulée finale **100.** La forme du moule **80** est donc adaptée en fonction. Un moulage en compression est réalisé par application d'une pression et d'un chauffage. De manière classique, la température, la pression, le cycle thermique et le temps de cuisson sont choisis par l'homme du métier en fonction de la quantité et de la nature du polymère thermodurcissable présent dans l'ensemble **60** de fibres de renfort préimprégné. A titre d'exemple, on pourra se référer à la demande WO 2016/207309 qui donne tous les détails nécessaires sur le procédé et le polymère thermodurcissable pouvant être utilisé. En particulier, le polymère thermodurcissable présent dans l'ensemble de fibres de renfort préimprégné est une résine époxy, phénolique, bismaléimide, ou cyanate, ou un mélange de telles résines, les résines époxy étant préférées. La résine thermodurcissable contiendra un durcisseur adapté pour obtenir la réticulation/durcissement de la résine lors de l'opération de moulage. En particulier, le polymère thermodurcissable représente au moins 25 % en masse de l'ensemble de fibres de renfort préimprégné, de préférence de 25 à 55% en masse de l'ensemble de fibres de renfort préimprégné.

Typiquement, le moulage en compression est, par exemple, réalisé à une température appartenant à la gamme allant de 100 à 400 °C, sous une pression appartenant à la gamme allant de 0,2 MPa à 2000 MPa, notamment pendant une durée de 15 secondes à 2 heures. Le choix de ces paramètres sera ajusté par l'homme du métier, en particulier en fonction de la nature du polymère thermodurcissable et de sa quantité, cette dernière étant notamment fonction de la taille du moule.

Lorsque l'empilement sec initial **40** comprend une part thermoplastique, l'étape **b** de moulage en compression va également avoir une action sur cette dernière. En particulier, elle va pouvoir entraîner la fusion, voire la réticulation du ou des couches poreuses polymériques présentes. Néanmoins, une telle transformation ne nuira en rien à la diffusion ultérieure d'une résine par injection ou infusion, nécessaire à la réalisation d'une pièce composite, compte tenu de la faible quantité que représente la part polymérique dans l'empilement sec **400** ainsi obtenu.

L'étape **b** de moulage en compression permet également d'assurer, après refroidissement, la liaison entre l'empilement sec **400** et la partie moulée **300** obtenus, au final, et formant l'élément composite intermédiaire **200.** En effet, lors du moulage, le polymère thermodurcissable va également diffuser au niveau de l'interface **600** avec l'empilement sec **400** et se durcir après refroidissement et ainsi solidariser les deux parties à l'interface. En effet, suite à l'application de la pression et du chauffage, lors de l'opération de moulage en compression, le polymère va pénétrer dans une partie de l'épaisseur de l'empilement sec **400.** Par ailleurs, comme illustré **figure 3****,** dans le cas où l'ensemble **60** de fibres de renfort préimprégné comprend des fibres courtes, notamment des morceaux de fibres unidirectionnelles, il est possible qu'un fluage des fibres de renfort et du polymère de l'ensemble **60** de fibres de renfort préimprégné, intervienne et, ainsi, que la surface de contact **600** entre la partie moulée obtenue et l'empilement sec soit plus importante que la zone de contact **70** initiale correspondant à la surface de l'empilement sec **40** sur laquelle l'ensemble **60** de fibres de renfort préimprégné était déposé. Ce fluage permet également à l'ensemble **60** de fibres de renfort préimprégné de parfaitement épouser les parois internes du moule **80** et ainsi obtenir une partie moulée **300** de forme complexe.

L'étape c de refroidissement est, le plus souvent, réalisée hors du moule. Cependant, le refroidissement peut aussi être réalisé dans le moule, le plus souvent en maintenant la pression appliquée dans le moule.

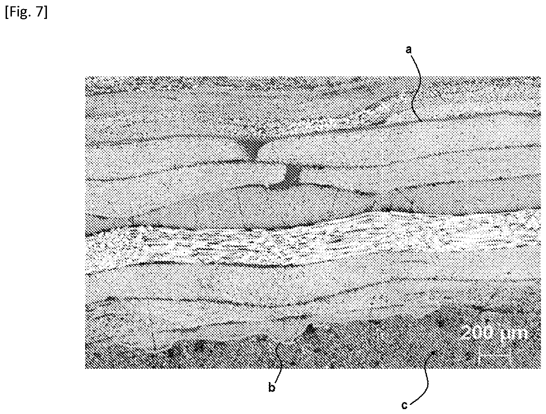

Un des avantages de l'invention est que l'étape **b** de moulage en compression entraine également, à partir de l'interface **600,** la diffusion dans l'empilement sec initial **40,** d'une partie du polymère thermodurcissable présente dans l'ensemble **60** de fibres de renfort préimprégné. Ainsi, au final à l'issue de l'étape **b** de moulage en compression, lorsque la résine est dans son état thermodurci, celle-ci pénètre dans une partie de l'épaisseur de l'empilement sec **400** au niveau de l'interface **600** avec la partie moulée **300,** ce qui va avoir pour effet de renforcer la liaison entre l'empilement sec **400** et la partie moulée **300** obtenus. En particulier, une telle diffusion intervient sur une épaisseur d'au moins 2 mm, à partir de l'interface **600.** En général, l'empilement sec initial **40** comporte de 4 à 20 plis de renfort fibreux, de préférence de 8 à 16 plis **50** de renfort fibreux et le polymère thermodurci pénètre dans au moins deux plis de renfort fibreux de l'empilement sec, en particulier au moins 4 plis de renfort fibreux de l'empilement sec **400** (ce qui inclue les couches de fibres de renfort), présents dans l'élément composite intermédiaire **200** obtenu à l'issue de l'opération de moulage. Ceci ressort clairement de la photographie prise par microscope optique ZEISS Axio Imager M2m présentée sur la **figure 7** qui est une vue en coupe d'un matériau de renfort intermédiaire conforme à l'invention. La ligne de démarcation **a** correspond à l'interface entre la partie moulée (qui se trouve au-dessus) et l'empilement sec (qui se trouve en dessous). Une résine d'inclusion a été ajoutée à l'empilement sec, afin de pouvoir mettre en évidence la zone de l'empilement sec déjà imprégnée de polymère thermodurci. La vue est réalisée à partir d'un échantillon placé dans un moule puis recouvert de résine d'inclusion pour le maintenir. Une séquence de polissage automatisé par Struers Tegramin-25 permet d'obtenir une surface plane et sans défaut pour les observations au microscope. La ligne de démarcation **b** correspond à l'interface résine d'inclusion **c** /zone de l'empilement sec imprégné de polymère thermodurci. On voit que la ligne **b** est bien en dessous de la ligne **a,** la distance entre ces deux lignes correspondant à l'épaisseur de l'empilement sec sur laquelle le polymère thermodurci, également présent dans la partie moulée, a pénétré. Néanmoins, il reste dans l'empilement sec des plis de renfort fibreux dans lesquels le polymère issu de la partie moulée n'a pas pénétré. En particulier, dans l'empilement sec **400,** présent dans l'élément composite intermédiaire **200,** au moins 2, de préférence au moins 4 plis de renfort fibreux ne comportent pas de polymère thermodurci ayant pénétré à partir de la partie moulée **300.**

Certaines variantes peuvent être apportées à ce procédé pour favoriser l'accroche de l'ensemble de fibres de renfort préimprégné, sur l'empilement sec et, au final, la liaison entre les deux parties constituant l'élément composite intermédiaire final **200** obtenu. Notamment, au niveau de la surface **70** sur laquelle l'ensemble **60** de fibres de renfort préimprégné d'un polymère thermodurcissable est apposé, des découpes ou des perforations peuvent avoir été réalisées. A titre d'exemples, de telles découpes ou perforations peuvent présenter une dimension maximale de 2 à 150 mm.

A l'issue de l'étape **b,** l'élément composite intermédiaire va pouvoir être démoulé et transféré dans un autre dispositif adapté à la réalisation d'une pièce composite par procédé direct.

### Procédé de fabrication de pièces composites et pièces composites

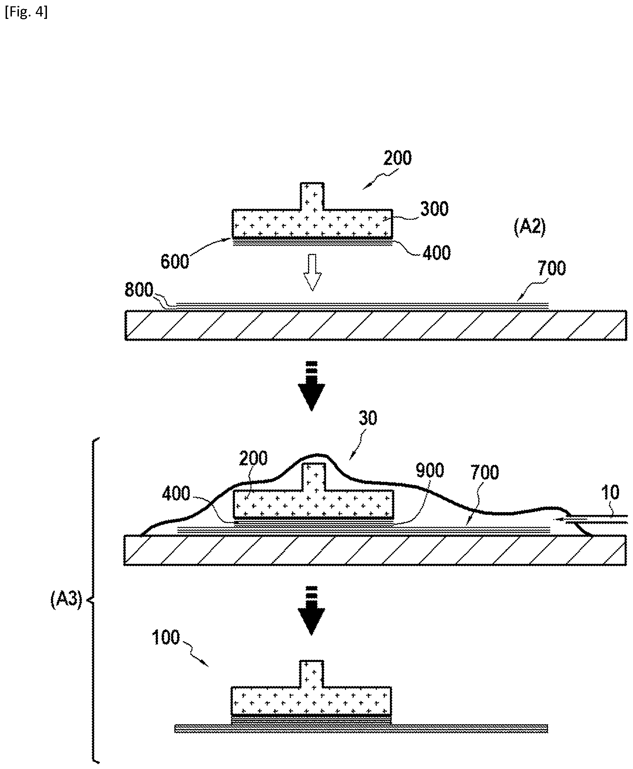

Selon une première variante illustrée **figure 4****,** l'invention concerne un procédé de fabrication d'une pièce composite **100** comprenant les étapes suivantes :
**A1-** disposer d'un élément composite intermédiaire **200** selon l'invention ou d'un élément composite intermédiaire obtenu selon le procédé de fabrication d'un élément composite intermédiaire selon l'invention,
**A2-** apposer ledit élément composite intermédiaire **200** sur au moins une partie de la surface d'un empilement sec de plis de renfort fibreux, nommé empilement sec additionnel **700,** de manière à ce que l'empilement sec **400** de l'élément composite intermédiaire **200,** vienne appuyer contre l'empilement sec additionnel **700,**
**A3-** infuser ou injecter une résine thermodurcissable, thermoplastique ou un mélange de telles résines, à la fois dans l'empilement sec **400** de l'élément composite intermédiaire **200** et dans l'empilement sec additionnel **700,** ladite infusion ou injection étant suivie d'un refroidissement permettant d'obtenir la pièce composite finale **100** souhaitée. Dans le cas où la résine est une résine thermodurcissable ou comprend une résine thermodurcissable, l'infusion ou l'injection est réalisée dans des conditions conduisant à la réticulation de cette dernière, ce qui est classiquement réalisé par un cycle de cuisson adapté.

Dans le cadre de l'invention, la partie de l'empilement sec **400** qui est positionnée sur l'empilement sec additionnel **700** ne comporte pas de polymère thermodurci et va donc présenter une certaine souplesse pour épouser la surface de l'empilement sec additionnel sur lequel il est apposé. Lors de l'étape **A3,** la résine va alors être diffusée dans la partie de l'empilement sec **400** qui est disponible pour une telle diffusion, en plus de se diffuser dans l'empilement sec additionnel **700.** Un cycle de traitement en température est appliqué à l'étape **A3,** qui après refroidissement, conduit à la consolidation de l'ensemble et à l'obtention de la pièce finale **100.**

Là encore, l'empilement sec additionnel **700** est qualifié de « sec » car, pour la fabrication d'une pièce composite, il doit être associé à une résine thermoplastique ou thermodurcissable, éventuellement en mélange, en particulier à une résine thermodurcissable. L'empilement sec additionnel **700** pourra donc comprendre une part polymérique, mais cette dernière représentera au plus 15%, de préférence au plus 10% de la masse totale de l'empilement sec additionnel **700,** et représentera de préférence de 0,5 à 10%, et préférentiellement de 2 à 6% de la masse totale de l'empilement sec additionnel **700.** La part polymérique peut notamment se trouver sous la forme d'une ou plusieurs couches intégrées dans un pli de renfort fibreux, intercalées entre deux plis de renfort fibreux et/ou positionnées en surface de l'empilement sec additionnel **700,** ou encore sous la forme de fils de couture ou tricotage. En particulier, l'empilement sec **700** comprend soit au moins une couche poreuse polymérique intercalée entre deux plis successifs de renfort fibreux, soit un pli de renfort fibreux incluant au moins une couche poreuse polymérique positionnée face à un autre pli de renfort fibreux, dans l'empilement sec **700.**

L'interface **900** entre l'élément composite intermédiaire **200** et l'empilement sec additionnel **700,** se fait par l'intermédiaire de l'empilement sec **400.** C'est sa partie qui ne comprend pas de polymère thermodurci ayant pénétré depuis la partie moulée, dans l'épaisseur de ce dernier, qui est apposée sur l'empilement sec additionnel **700.** On a ainsi à l'interface **900** une interface entre deux matériaux secs au sein desquels la résine injectée/infusée va pouvoir pénétrer et durcir au moment de l'étape **A3.**

Tout pli de renfort fibreux décrit précédemment pour la constitution de l'empilement sec initial **40** convient pour la constitution de l'empilement sec additionnel **700.** Les plis **800** de renfort fibreux constituant l'empilement sec additionnel **700** peuvent être identiques structurellement, à ceux constituant l'empilement sec initial **40** utilisé pour la constitution de l'élément composite intermédiaire **200** ou bien être différents. Par exemple, il est possible d'utiliser des plis du type NCF dans l'empilement sec additionnel **700,** alors que l'empilement sec **400** de l'élément composite intermédiaire **200** est composé de tissus ou de nappes unidirectionnelles uniquement liées par l'intermédiaire de couches polymériques intercalaires.

Cette première variante est particulièrement avantageuse, car elle permet d'allier les avantages associés aux procédés direct et indirect. Une partie moulée complexe peut être réalisée par procédé indirect et ensuite associée à une partie de forme plus simple, mais de plus grande dimension, qui elle sera ensuite consolidée par procédé direct. La liaison intermédiaire assurée entre l'empilement sec **400** présent dans l'élément composite intermédiaire **200** et la partie moulée **300** confère une liaison particulièrement forte entre les deux parties concernées. En particulier, il sera possible d'apposer un ou plusieurs éléments composites intermédiaires destinés à former une nervure ou une protubérance, en surface d'un empilement sec additionnel destiné à constituer la partie majeure de la pièce composite finale.

Il est possible que l'empilement sec additionnel **700** de plis de renfort fibreux soit directement formé dans l'équipement adapté au procédé direct, par dépose des plis individuellement, ou bien que l'empilement soit déjà formé préalablement et déposé en une seule opération dans le dispositif dans lequel la résine **10** va ensuite être injectée ou infusée. Dans le second cas, l'empilement sec additionnel **700** pourra se trouver sous la forme d'une préforme adaptée à la forme souhaitée pour la pièce composite finale **100.**

Les procédés de placement de plis et de fabrication de préformes sont bien connus de l'homme du métier.

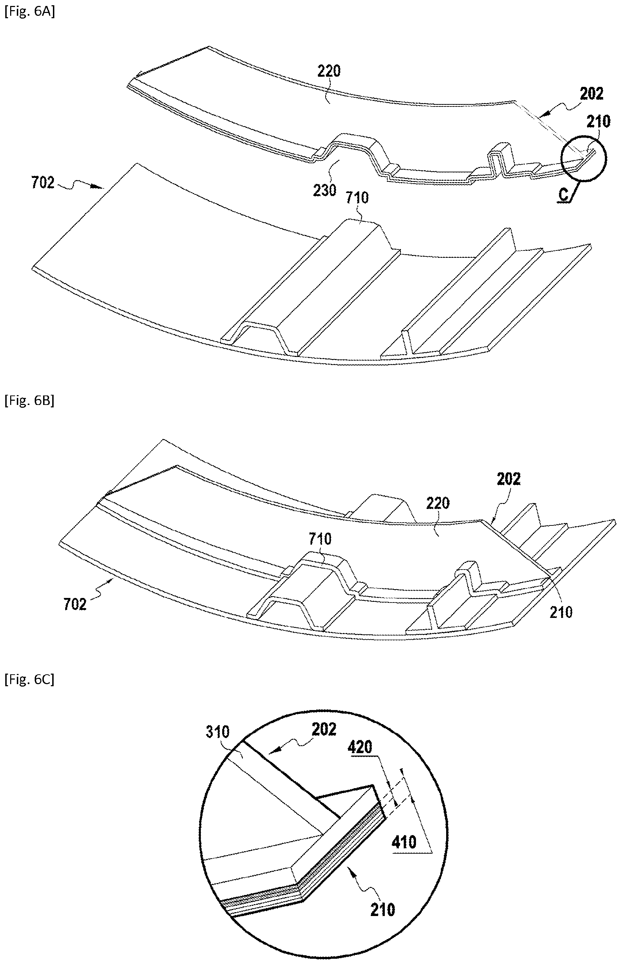

Les **figures 6A** à **6B** illustrent un tel cas. Sur la **figure 6A** sont représentés un empilement sec additionnel **702,** ou plus précisément la partie de cet empilement sec additionnel comportant la surface sur laquelle un élément composite intermédiaire **202** va être apposé. L'empilement sec additionnel **702** est préformé et comporte une série de nervures **710.** De son côté, l'élément composite intermédiaire **202** est de forme complexe, il comprend une assise **210** et un plan d'accroche **220.** L'assise **210** va également comporter une série de rails **230,** dans lesquels vont pouvoir venir s'insérer les nervures **710.** La pièce composite finale, qui sera obtenue après infusion/injection de résine dans l'ensemble des deux éléments apposés l'un sur l'autre comme présenté **figure 6B****,** peut notamment trouver application dans la constitution de train d'atterrissage pour avion.

La **figure 6C** présente, en gros plan, une partie de l'élément composite intermédiaire **202** de la **figure 6A****,** mettant en évidence la partie moulée **310** et l'empilement sec **410** qui se trouve dans l'assise **210.** Sur la zone **420,** de l'empilement sec **410** qui s'étend à partir de la partie moulée **310,** il y a pénétration du polymère thermodurci qui a diffusé lors du moulage et s'est rependu, hors de la partie moulée, pour imprégner partiellement l'empilement sec **410.** Le reste de l'empilement **410** est sec et ne comporte pas de polymère thermodurci et va présenter une plus grande souplesse pour épouser la surface de l'empilement sec additionnel **702,** qui a été mis en forme, en particulier au niveau des nervures **710.**

De manière classique, dans un procédé de fabrication d'une pièce composite par procédé direct, une résine **10** thermodurcissable, thermoplastique ou un mélange de résines thermodurcissable et thermoplastique est injecté(e) ou infusé(e) au sein d'un empilement sec.

Dans le cadre de l'invention, dans les cas où il y a présence d'une part thermoplastique dans la couche poreuse polymérique présente dans l'empilement sec additionnel **700,** préalablement à l'infusion ou à l'injection de la résine, un dépôt ou une mise en forme utilisant le caractère collant à chaud de ladite au moins une couche poreuse polymérique présente pourra être mise en oeuvre. De manière avantageuse, dans ce cas le procédé comprend une étape préalable de constitution de l'empilement sec additionnel **700,** avec une étape de dépose ou de mise en forme des plis de renfort fibreux destinés à former ledit empilement, dans laquelle, la couche poreuse polymérique est chauffée à une température entrainant la fusion au moins partielle de la ou des couche(s) poreuse(s) définie(s) dans le cadre de l'invention, et en particulier à une température appartenant à la gamme allant de 80 à 130°C, de préférence à la gamme allant de 80 à 120°C.

Les procédés de dépose utilisables pour former un empilement, que ce soit directement dans l'équipement utilisé ensuite pour l'infusion ou l'injection de la résine, ou pour la fabrication d'une préforme plane, voire d'une préforme selon une forme tridimensionnelle souhaitée, sont bien connus de l'homme du métier.

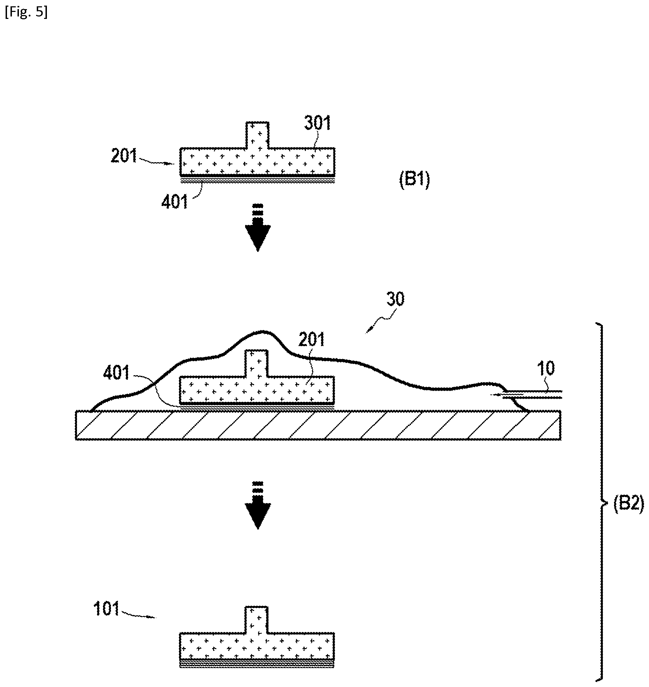

Selon une deuxième variante illustrée **figure 5****,** bien que non préféré, l'invention concerne un procédé de fabrication d'une pièce composite **101** comprenant les étapes suivantes :
**B1-** disposer d'un élément composite intermédiaire **201** selon l'invention ou obtenu selon le procédé décrit dans le cadre de l'invention,
**B2-** infuser ou injecter une résine **10** thermodurcissable, thermoplastique ou un mélange de telles résines dans l'empilement sec de l'élément composite intermédiaire, dans des conditions conduisant à sa réticulation dans le cas de l'utilisation d'une résine thermodurcissable, suivie d'un refroidissement permettant d'obtenir la pièce composite finale **101** souhaitée.

Dans ce cas, seul l'élément composite intermédiaire **201,** composé d'une partie moulée **301** et d'un empilement sec **401** qui sont liés ensemble grâce à la pénétration du polymère thermodurci, formant la matrice polymérique de la partie moulée **301** dans une partie de l'épaisseur de l'empilement sec **401,** est soumis à un procédé direct. Dans l'exemple illustré, une résine **10** est injectée avec utilisation d'un dispositif du type bâche à vide **30.** La résine va alors être diffusée dans la partie de l'empilement sec **401** qui est disponible pour une telle diffusion.

Quel que soit le procédé de fabrication d'une pièce composite, la fabrication de la pièce composite par procédé direct met en oeuvre, en tant qu'étape finale, une étape de diffusion, par infusion ou injection, d'une résine thermodurcissable, thermoplastique ou d'un mélange de résines thermodurcissable et thermoplastique au sein du ou des empilement(s) sec(s) présent(s), suivie d'une étape de consolidation de la pièce souhaitée par une étape de polymérisation/réticulation suivant un cycle défini en température et sous pression, et d'une étape de refroidissement. Selon un mode de réalisation particulier, adapté par ailleurs à toutes les variantes de mise en oeuvre décrites en relation avec l'invention, les étapes de diffusion, consolidation et refroidissement sont mises en oeuvre dans un moule ouvert ou fermé, en particulier dans un moule ouvert, par exemple par infusion sous bâche à vide.

En particulier, la résine diffusée peut être de nature thermoplastique ou de préférence thermodurcissable, ou constituée d'un mélange de résines thermodurcissable et thermoplastique. A titre d'exemple de résine thermoplastique, on peut citer les polyamides, polyesters, polyamide-imides, polyéthersulfones, polyimides, polyéthercétones, polyméthacrylates de méthyle, polyéthers aromatiques... Les résines thermodurcissables utilisables sont, en particulier, choisies parmi les époxydes, les polyesters insaturés, les vinylesters, les résines phénoliques, les polyimides, les bismaléimides, les résines phénol-formaldéhydes, urée-formaldéhydes, les 1,3,5-triazine-2,4,6-triamines, les benzoxazines, les esters de cyanates, et leurs mélanges. Une telle résine pourra également comprendre un ou plusieurs agents durcisseurs, bien connus de l'homme du métier pour être utilisés avec les polymères thermodurcissables sélectionnés. De préférence, l'invention sera mise en oeuvre avec une résine thermodurcissable lors de l'étape d'infusion ou d'injection, et notamment une résine époxy. Une liaison mécanique existe déjà avec la partie moulée dont la matrice polymérique a déjà réticulé. On pourra, cependant, privilégier l'utilisation d'une résine injectée ou infusée appartenant à la même famille chimique que celle présente dans la partie moulée, voire que la part polymérique présente dans le ou les empilements secs. Ceci favorisera l'obtention de propriétés structurelles de même nature.

L'invention, utilisera de préférence, une infusion sous pression réduite, notamment sous une pression inférieure à la pression atmosphérique, notamment inférieure à 100 kPa et, de préférence, comprise entre 10 et 100 kPa, de la résine thermodurcissable pour la réalisation de la pièce composite. L'infusion sera, de préférence, réalisée dans un moule ouvert, par exemple par infusion sous bâche à vide.

La pièce composite est obtenue au final après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce composite souhaitée est réalisée par polymérisation/réticulation suivant un cycle défini en température et sous pression, suivie d'un refroidissement. Dans le cas de résine thermodurcissable, on a le plus souvent une étape de gélification de la résine avant son durcissement. La pression appliquée lors du cycle de traitement est faible dans le cas de l'infusion sous pression réduite et plus forte dans le cas de l'injection dans un moule RTM.

Il apparait que dans le cadre de l'invention, l'élément composite intermédiaire est réalisé selon un premier procédé de moulage en compression, alors que la pièce composite finale est fabriquée par infusion/injection de résine. Ainsi, ces deux étapes de fabrication qui nécessitent des appareillages différents peuvent être mises en oeuvre sur un même site de fabrication, et être intégrées dans une ligne de production unique, ou être réalisées sur deux sites différents, en fonction des contraintes techniques et des ressources disponibles.

Les pièces composites ainsi obtenues font partie intégrante de l'invention. La **figure 2** illustre schématiquement une telle pièce composite **1.** Cette dernière comporte une partie moulée **3,** ainsi qu'une partie **7** comportant des couches de renfort fibreux **8** imprégnées d'une matrice thermoplastique ou thermodurcie (non représentée) résultant de la mise en oeuvre d'un procédé direct.

Au niveau de l'interface **9** avec la partie moulée **3,** il y a une pénétration du polymère thermodurci formant la partie moulée. Il est possible qu'une telle pièce soit obtenue à partir de l'élément composite intermédiaire 2 présenté **figure 1****,** selon le procédé décrit **figure 4****,** auquel cas une partie des couches de renfort fibreux **8** formant la partie **7** correspondent aux couches de renfort fibreux **5** qui formaient l'empilement sec **4.**

La présente invention convient à la fabrication d'une grande variété de pièces composites dans le domaine de l'aéronautique, de l'automobile, du spatial, de la défense, de l'industrie ou de l'énergie. Des exemples de telles pièces sont donnés ci-après : panneaux de voilure, fuselages, trappes de train d'atterrissage, panneaux mobiles, portes, caissons de voilure, nacelles, panneaux de fuselage, empennages verticaux ou horizontaux, panneaux auto-raidis, planchers, capotages, châssis monocoques....

### Exemples

Les exemples décrits ci-après permettent d'illustrer l'invention, mais n'ont aucun caractère limitatif.

Différents éléments composites intermédiaires ont été réalisés. Pour la réalisation de la partie moulée, soit des matériaux HexMC^{®}, soit des tissus préimprégnés d'une résine thermodurcissable, référencés HexPly^{®} M81, et commercialisés par la société Hexcel Corporation (Stamford USA), ont été utilisés. L'HexMC^{®} est un matériau de moulage par compression de haute performance, destiné à la fabrication de pièces de formes complexes. Il est constitué de fibres de carbone longues (50 mm) et comprend une quantité de résine thermodurcissable de 38% massique. L'HexPly^{®} M81 est un tissu préimprégné de 200 g/m² et imprégné à 42% en masse de résine époxy.

Pour la réalisation des empilements secs, que ceux-ci correspondent à ceux présents dans les matériaux composites intermédiaires ou aux empilements secs additionnels utilisés pour réaliser les pièces composites finales, des nappes unidirectionnelles de fibres de carbone, fibres IMA 12K de la société Hexcel, associées sur chacune de leur face à un liant polymérique de type voile copolyamide 1R8 de 4g/m2 de la société Protechnic. L'association entre la nappe unidirectionnelle et les voiles a été réalisée grâce au caractère collant à chaud du voile. Le liant polymérique est associé au carbone comme décrit dans la demande WO 2010/046609. Dans la suite, cette association voile/nappe unidirectionnelle/voile est nommée « pli sec » (ou « pli » dans les **Tableaux 1** et **2** ci-après). De tels plis secs sont notamment décrits dans la demande EP 2 342 073.

Pour l'injection, une résine époxy pour utilisation sur structures primaire et secondaire en aéronautique, commercialisée par Hexcel Corporation (Stamford USA), sous la référence HexFlow^{®} RTM6 a été utilisée.

Les **Tableaux 1** et **2** ci-après résument les différents matériaux composites intermédiaires et pièces selon l'invention qui ont été réalisés.

**Tableau 1 :**

| Elément composite intermédiaire | Partie moulée | Nombre de plis de l'empilement sec | Orientation des plis de l'empilement sec |
|---|---|---|---|
| 1 | HexMC^{®} | 16 | [45/0/-45/90]2S |
| 2 | HexMC^{®} | 8 | [45/0/-45/90/45/0/- 45/90] |
| 3 | HexMC^{®} | 4 | [45/0/-45/90] |
| 4 | HexPly^{®} M81 | 8 | [45/0/-45/90/45/0/- 45/90] |

**Tableau 2 :**

| Pièce composite | Matériau composite intermédiaire | Empilement sec additionnel | Nombre de plis dans l'empilement sec additionnel | Orientation des plis de l'empilement sec additionnel |
|---|---|---|---|---|
| I | 1 | non | - | |
| II | 2 | oui | 8 | [90/-45/0/45/90/ -45/0/45] |
| III | 3 | oui | 12 | [45/0/-45/90/90/ -45/0/45/90 /-45/0/45] |
| IV | 4 | oui | 8 | [90/-45/0/45/90 /-45/0/45] |

Les trois plis de HexMC^{®} de 180mm x 180mm ont été découpés dans un rouleau de 460 mm de large à l'aide d'une presse à emporte-pièces, mis en étuve à 180°C pendant 10 min, puis refroidis à température ambiante (22°C). Les plis secs de 200mm x 200mm et les plis de HexMC^{®} ou de HexPly^{®} ont été superposés, puis introduits dans un moule préchauffé à 180°C. L'interface entre l'ensemble de préimprégnés et l'empilement sec représentait 80% de la surface supérieure de l'empilement sec. Une presse a été utilisée pour fermer le moule et une pression de 100 bars a été appliquée pendant 20 min à 180°C. L'élément composite intermédiaire a été récupéré, sans refroidissement préalable du moule. Le refroidissement a eu lieu hors du moule.

Après inclusion de résine, les éléments composites intermédiaires obtenus ont été observés, avec un microscope optique ZEISS Axio Imager M2m au niveau de l'interface entre la partie moulée obtenue avec le HexMC^{®} et l'empilement sec. Les prises de vue ont été réalisées à partir d'un échantillon des éléments composites intermédiaires obtenus placé dans un moule, puis recouvert de résine d'inclusion pour le maintenir. Une séquence de polissage automatisé par Struers Tegramin-25 a été menée pour obtenir une surface plane et sans défaut pour les observations au microscope. Ces observations ont bien mis en évidence, la pénétration du polymère thermodurci apporté par le HexMC^{®} dans l'empilement sec, au niveau de l'interface. Cette pénétration est visible sur la **figure 7** qui est une photographie prise à l'interface dans le cas de l'élément composite intermédiaire 2 présenté dans le **Tableau 1.** L'observation de la **figure 7** montre que la pénétration a lieu sur une profondeur de 2 mm, atteignant 3 à 5 plis de l'empilement sec.

L'élément composite intermédiaire ainsi obtenu a été placé, dans un moule, seul (pièce composite I) ou sur un empilement sec additionnel (pièce composite II à IV), pour former les pièces conformément au **Tableau 2.** La résine époxy commercialisée par Hexcel sous la référence HexFlow RTM6 a été infusée à 80°C sous 1 bar dans le moule équipé d'un système de bâche à vide le tout étant maintenu à une température de 120°C. Lorsque la préforme était remplie et que la résine sortait du moule, le tuyau de sortie a été fermé et le cycle de polymérisation commencé (montée de 3°C/min jusqu'à 180°C, suivie d'une post-cuisson de 2h à 180°C et d'un refroidissement à 5°C/min).

Des éprouvettes ont ensuite été découpées aux dimensions adaptées pour réaliser des tests de cisaillement dans le plan correspondant à l'interface partie moulée/empilement sec dans la matrice de résine, selon la norme ASTM D 2344. L'éprouvette a été positionnée sur deux points d'appui (dont la pointe présente un rayon de 1,5 mm) espacés d'une distance égale à 4 fois l'épaisseur de l'éprouvette, et un poinçon (dont la pointe présente un rayon de 1,5 mm) a été placé sur la face opposée de l'éprouvette, au niveau du milieu des deux points d'appui. Des valeurs de 41 à 56 MPa ont été obtenues, en fonction des configurations, ce qui est tout à fait satisfaisant. Aucune différence notable n'a été constatée sur les données de résistance au cisaillement pour les pièces I et II, ce qui montre que le fait de réaliser le procédé direct avec ajout d'un empilement sec additionnel n'a pas d'impact sur la résistance au cisaillement inter-laminaire de la pièce obtenue.

## Revendications

1. Elément composite intermédiaire (**2, 200, 201, 202**) comprenant :
- au moins une partie moulée (**3, 300, 301, 310**) comprenant un ensemble de fibres de renfort intégrées dans une matrice de polymère thermodurci,
- au moins un empilement sec (**4, 400, 401, 410**) de couches (**5**) de fibres de renfort, comprenant au moins une couche poreuse polymérique intercalée entre deux couches (**5**) de fibres de renfort successives, la partie moulée (**3, 300, 301, 310**) étant apposée en surface de l'empilement et liée à ce dernier, l'élément composite intermédiaire est tel que le polymère thermodurci pénètre dans une partie de l'épaisseur de l'empilement sec (**4, 400, 401, 410**) à partir de la surface de l'empilement sec (**4, 400, 401, 410**) sur laquelle la partie moulée (**3, 300, 301, 310**) est apposée, ce qui assure la liaison entre l'empilement sec (**4, 400, 401, 410**) et la partie moulée (**3, 300, 301, 310**)**.**

2. Elément composite intermédiaire (**2, 200, 201, 202**) selon la revendication 1 **caractérisé en ce que** l'empilement sec (**4, 400, 401, 410**) de couches (5) de fibres de renfort présente une épaisseur moyenne d'au moins 5 mm et le polymère thermodurci pénètre dans une partie de l'épaisseur de l'empilement à partir de la surface de l'empilement selon une profondeur moyenne de pénétration d'au moins 2 mm.

3. Elément composite intermédiaire (**2, 200, 201, 202**) selon la revendication 1 ou 2 **caractérisé en ce que** l'empilement sec (**4, 400, 401, 410**) comprend une part polymérique représentant au plus 10% de la masse totale de l'empilement, de préférence de 0,5 à 10% de la masse totale de l'empilement, et préférentiellement de 2 à 6% de la masse totale de l'empilement, ladite part polymérique assurant au moins partiellement, la cohésion de l'empilement.

4. Elément composite intermédiaire (**2, 200, 201, 202**) selon la revendication 3 **caractérisé en ce que** la part polymérique est un polymère thermoplastique, un polymère comprenant une part thermoplastique ou un mélange de tels polymères.

5. Eléments composite intermédiaire (**2, 200, 201, 202**) selon l'une des revendications 1 à 4 **caractérisé en ce que** les couches (**5**) de fibres de renfort sont des tissus.

6. Elément composite intermédiaire (**2, 200, 201, 202**) selon l'une des revendications 1 à 4 **caractérisé en ce que** les couches (**5**) de fibres de renfort sont des nappes unidirectionnelles de fibres de renfort orientées selon au moins deux directions différentes.

7. Elément composite intermédiaire (**2, 200, 201, 202**) selon la revendication 6 **caractérisé en ce que** l'empilement sec (**4, 400, 401, 410**) est formé d'un ou de plusieurs NCF, chaque NCF étant un ensemble de plusieurs nappes unidirectionnelles de fibres de renfort orientées selon au moins deux directions différentes liées par couture ou tricotage.

8. Elément composite intermédiaire (**2, 200, 201, 202**) selon la revendication 6 **caractérisé en ce que** l'empilement sec (**4, 400, 401, 410**) est formé d'un ou de plusieurs NCF, chaque NCF étant un ensemble de plusieurs nappes unidirectionnelles de fibres de renfort orientées selon au moins deux directions différentes, une ou plusieurs couche(s) poreuse(s) polymérique(s) pouvant être présente(s) en surface, ledit ensemble étant lié par couture ou tricotage.

9. Elément composite intermédiaire (**2, 200, 201, 202**) selon l'une des revendications 1 à 8 **caractérisé en ce que** la ou les couche(s) poreuse(s) polymérique(s) présente(s) est(sont) un film poreux, une grille, un dépôt de poudre, un tissu ou, de préférence, un non-tissé ou voile.

10. Elément composite intermédiaire (**2, 200, 201, 202**) selon l'une des revendications 1 à 9 **caractérisé en ce que** l'empilement sec (**4, 400, 401, 410**) présente un caractère cohérent obtenu, au moins en partie, grâce au caractère collant à chaud de la ou des couche(s) poreuse(s) polymérique(s) présente(s) entre deux couches (5) de fibres de renfort.

11. Elément composite intermédiaire (**2, 200, 201, 202**) selon l'une des revendications 1 à 10 **caractérisé en ce que** les fibres de renfort de l'empilement sec (**4, 400, 401, 410**) et/ou de la partie moulée (**3, 300, 301, 310**) sont des fibres de verre, de carbone, d'aramide ou de céramique, les fibres de carbone étant particulièrement préférées.

12. Elément composite intermédiaire (**2, 200, 201, 202**) selon l'une des revendications 1 à 11 **caractérisé en ce que** la partie moulée (**3, 300, 301, 310**) est obtenue par moulage de morceaux de fibres unidirectionnelles imprégnées d'une résine thermodurcissable, qui, de préférence, forme un tapis intermédiaire dans lequel les morceaux sont disposés de façon aléatoire.

13. Elément composite intermédiaire (**2, 200, 201, 202**) selon la revendication 12 **caractérisée en ce que** les morceaux sont rectangulaires ou sensiblement rectangulaires, et présentent, de préférence, une longueur de 1 cm à 10 cm, une largeur de 2 mm à 2 cm et une épaisseur de 0,02 mm à 0,50 mm.

14. Elément composite intermédiaire (**2, 200, 201, 202**) selon l'une des revendications 1 à 13 **caractérisé en ce que** le polymère thermodurci de la partie moulée (**3, 300, 301, 310)** est une époxy.

15. Elément composite intermédiaire (**2, 200, 201, 202**) selon l'une des revendications 1 à 14 **caractérisé en ce que** le polymère thermodurci représente au moins 25 % en masse de la partie moulée (**3, 300, 301, 310**), de préférence de 25 à 55% en masse de la partie moulée (**3, 300, 301, 310**)**.**

16. Elément composite intermédiaire (**2, 200, 201, 202**) selon l'une des revendications 1 à 15 **caractérisé en ce que** l'empilement sec (**4, 400, 401, 410**) comporte de 4 à 20 couches (**5**) de fibres de renfort, de préférence de 8 à 16 couches (**5**) de fibres de renfort et, de manière avantageuse au moins 2, de préférence au moins 4 couches (**5**) de fibres de renfort de l'empilement sec (**4, 400, 401, 410**) ne comportent pas de polymère thermodurci ayant pénétré depuis la partie moulée (**3, 300, 301, 310**)**.**

17. Elément composite intermédiaire (**2, 200, 201, 202**) selon l'une des revendications 1 à 16 **caractérisé en ce que** la partie moulée (**3, 300, 301, 310**) présente une forme complexe, par rapport à la forme de l'empilement.

18. Elément composite intermédiaire (**2, 200, 201, 202**) selon l'une des revendications 1 à 17 **caractérisé en ce que** la partie moulée (**3, 300, 301, 310**) a la forme d'une charnière, d'un point d'accroche, d'une nervure, d'une poutre nervurée, d'un support, d'une console, d'un canal, d'une attache, d'une chape, d'un raidisseur, d'un encadrement de trappe, d'un encadrement de porte, d'un bras de levier, d'une embase, d'une ferrure, d'une jointure, d'un emboitement ou d'un pivot.

19. Procédé de fabrication d'un élément composite intermédiaire (**2, 200, 201, 202**) comprenant :
- au moins une partie moulée (**3, 300, 301, 310**) comprenant un ensemble de fibres de renfort intégrées dans une matrice de polymère thermodurci,
- au moins un empilement sec (**4, 400, 401, 410**) de couches (**5**) de fibres de renfort, comprenant au moins une couche poreuse polymérique intercalée entre deux couches (**5**) de fibres de renfort successives, la partie moulée (**3, 300, 301, 310**) étant apposée en surface de l'empilement et liée à ce dernier, ledit procédé de fabrication comportant les étapes successives suivantes :
**a-** apposer au moins un ensemble (**60**) de fibres de renfort préimprégné d'un polymère thermodurcissable, sur une zone de surface **(70)** d'un empilement sec initial **(40)** de plis **(50)** de renfort fibreux, comprenant au moins une couche poreuse polymérique intercalée entre deux couches **(50)** de fibres de renfort successives, **b-** réaliser, dans un moule, une opération de moulage en compression à chaud de l'ensemble **(60)** de fibres de renfort préimprégné du polymère thermodurcissable, déposé sur l'empilement sec initial **(40)** de plis **(50)** de renfort fibreux, conduisant à la réticulation du polymère thermodurcissable et à sa pénétration dans une partie de l'épaisseur de l'empilement, **c-** réaliser un refroidissement, conduisant à l'obtention d'une partie moulée (**3, 300, 301, 310**) comprenant l'ensemble de fibres de renfort intégré dans le polymère thermodurci, formant matrice, avec une pénétration du polymère thermodurci dans une partie de l'épaisseur de l'empilement sec (**4, 400, 401, 410**) à partir de sa surface sur laquelle la partie moulée (**3, 300, 301, 310**) est apposée, ladite partie moulée (**3, 300, 301, 310**) se retrouvant ainsi liée, grâce à cette pénétration du polymère thermodurci, à l'empilement sec (**4, 400, 401**, **410**) de couches **(5)** de fibres de renfort ainsi obtenu.

20. Procédé de fabrication selon la revendication 19 **caractérisé en ce que** l'ensemble **(60)** de fibres de renfort préimprégné d'un polymère thermodurcissable apposé à l'étape **a** se trouve sous la forme d'une préforme de la partie moulée **(3, 300, 301, 310)** souhaitée.

21. Procédé de fabrication selon la revendication 19 ou 20 **caractérisé en ce que** les plis de renfort fibreux formant l'empilement sec initial **(40)** utilisé à l'étape **a** sont des nappes unidirectionnelles de fibres de renfort, associées sur au moins une de leurs faces à une couche poreuse polymérique, la ou les couches poreuses polymériques présentes dans ledit pli représentant au plus 10% de la masse totale dudit pli, de préférence de 0,5 à 10% de la masse totale dudit pli, et préférentiellement de 2 à 6% de la masse totale dudit pli et au moins une couche poreuse polymérique étant intercalée entre deux nappes unidirectionnelles de fibres de renfort successives.

22. Procédé de fabrication selon la revendication 21 **caractérisé en ce que** les plis **(50)** de renfort fibreux formant l'empilement sec initial **(40)** utilisé à l'étape **a** sont constitués d'une nappe unidirectionnelle de fibres de renfort, associée sur chacune de ses faces à une couche poreuse polymérique et les couches poreuses polymériques présentes sur chacune des faces de la nappe unidirectionnelle de fibres de renfort sont identiques.

23. Procédé de fabrication selon la revendication 19 ou 20 **caractérisé en ce que** les plis **(50)** de renfort fibreux formant l'empilement sec initial **(40)** sont des tissus de fibres de renfort, associés sur au moins une de leurs faces à une couche poreuse polymérique, la ou les couches poreuses polymériques présentes dans ledit pli représentant au plus 10% de la masse totale dudit pli, de préférence de 0,5 à 10% de la masse totale dudit pli, et préférentiellement de 2 à 6% de la masse totale dudit pli et au moins une couche poreuse polymérique étant intercalée entre deux tissus successifs.

24. Procédé de fabrication selon l'une des revendications 20 à 23 **caractérisé en ce que** la ou les couche(s) poreuse(s) polymérique(s) présente(s) dans lesdits plis a(ont) un caractère collant à chaud et l'association de la nappe unidirectionnelle ou du tissu et de ladite au moins une couche poreuse polymérique constituant un pli a été préalablement obtenue grâce au caractère collant à chaud de la couche poreuse polymérique.

25. Procédé de fabrication selon l'une des revendications 20 à 24 **caractérisé en ce que** l'empilement sec initial **(40)** de plis de renfort fibreux **(50)** utilisé à l'étape **a,** présente un caractère cohérent obtenu grâce au caractère collant à chaud de la ou des couche(s) poreuse(s) polymérique(s) présente(s).

26. Procédé de fabrication selon la revendication 25 **caractérisé en ce que** l'empilement sec initial **(40)** de plis **(50)** de renfort fibreux utilisé à l'étape **a** est préformé.

27. Procédé de fabrication selon l'une des revendications 20 à 24 **caractérisé en ce que** l'empilement sec initial **(40)** de plis **(50)** de renfort fibreux utilisé à l'étape **a,** ne présente pas de caractère cohérent, son caractère cohérent étant obtenu à l'issue de l'étape **b,** grâce au caractère collant à chaud de la ou des couche(s) poreuse(s) polymérique(s) présente(s).

28. Procédé de fabrication selon l'une des revendications 20 à 27 **caractérisé en ce que** la ou les couche(s) poreuse(s) polymérique(s) présente(s) dans lesdits plis **(50)** de l'empilement sec initial **(40)** utilisé à l'étape **a** comprend(nent) ou est(sont) constituée(s) d'un polymère thermoplastique ou d'un polymère comprenant une part thermoplastique.

29. Procédé de fabrication selon l'une des revendications 20 à 28 **caractérisé en ce que** la ou les couche(s) poreuse(s) polymérique(s) présente(s) dans lesdits plis **(50)** de l'empilement sec initial **(40)** utilisé à l'étape **a** est(sont) un film poreux, une grille, un dépôt de poudre, un tissu ou, de préférence, un non-tissé ou voile.

30. Procédé de fabrication selon la revendication 19 ou 20 **caractérisé en ce que** les plis **(50)** de renfort fibreux formant l'empilement sec initial **(40)** sont des nappes unidirectionnelles de fibres de renfort orientées selon au moins deux directions différentes, liées par couture ou tricotage.

31. Procédé de fabrication selon la revendication 30 **caractérisé en ce que** l'empilement sec initial **(40)** est formé de plusieurs NCF, chaque NCF étant un ensemble de plusieurs nappes unidirectionnelles orientées selon au moins deux directions différentes, une ou plusieurs couche(s) poreuse(s) polymérique(s) pouvant être présente en surface, ledit ensemble étant lié par couture ou tricotage.

32. Procédé de fabrication selon la revendication 30 ou 31 **caractérisé en ce que** la couture ou le tricotage est assuré par des fils de verre, de carbone, de basalte, de silice, de polyester ou des fils en un polymère thermoplastique, notamment des fils en un polymère thermoplastique présentant un titre dans la gamme allant de 5 à 150 dTex, et préférentiellement dans la gamme allant de 5 à 30 dTex.

33. Procédé de fabrication selon l'une des revendications 19 à 32 **caractérisé en ce que** les fibres des plis **(50)** de renfort fibreux de l'empilement sec initial **(40)** et/ou de l'ensemble **(60)** de fibres de renfort préimprégné sont des fibres de verre, de carbone, d'aramide ou de céramique, les fibres de carbone étant particulièrement préférées.

34. Procédé de fabrication selon l'une des revendications 19 à 33 **caractérisé en ce que** les fibres de renfort préimprégnées d'un polymère thermodurcissable constituant l'ensemble **(60)** destiné à former la partie moulée (**3, 300, 301, 310**), sont des morceaux de fibres unidirectionnelles imprégnés d'un polymère thermodurcissable, qui, de préférence, forme un tapis intermédiaire dans lequel les morceaux sont disposés de façon aléatoire.

35. Procédé de fabrication selon la revendication 34 **caractérisé en ce que** les morceaux sont rectangulaires ou sensiblement rectangulaires, et présentent, de préférence, une longueur de 1 cm à 10 cm, une largeur de 2 mm à 2 cm et une épaisseur de 0,02 mm à 0,50 mm.

36. Procédé de fabrication selon l'une des revendications 19 à 35 **caractérisé en ce que** le polymère thermodurcissable de l'ensemble **(60)** destiné à former la partie moulée (**3, 300, 301, 310**) est une époxy.

37. Procédé de fabrication selon l'une des revendications 19 à 36 **caractérisé en ce que** le polymère thermodurcissable de l'ensemble destiné à former la partie moulée (**3, 300, 301, 310**) représente au moins 25 % en masse dudit ensemble, de préférence de 25 à 55% en masse dudit ensemble.

38. Procédé de fabrication selon l'une des revendications 19 à 37 **caractérisé en ce que** l'étape **b** de moulage en compression entraine la diffusion du polymère thermodurcissable, qui au final dans son état thermodurci pénètre dans une partie de l'épaisseur de l'empilement au niveau de l'interface avec la partie moulée (**3, 300, 301, 310**), l'empilement sec de couches **(5)** de fibres de renfort obtenu présentant une épaisseur moyenne d'au moins 5 mm et le polymère thermodurci pénétrant dans une partie de l'épaisseur de l'empilement à partir de la surface de l'empilement selon une profondeur moyenne de pénétration d'au moins 2 mm.

39. Procédé de fabrication selon l'une des revendications 19 à 38 **caractérisé en ce qu'**à l'étape **a,** l'empilement sec initial **(40)** de plis de renfort fibreux comporte de 4 à 20 plis, de préférence de 8 à 16 plis, et, de manière avantageuse, à l'issue de l'étape **b,** au moins 2, de préférence au moins 4 couches **(5)** de fibres de renfort de l'empilement sec **(4, 400, 401, 410)** ne comportent pas de polymère thermodurci ayant pénétré depuis la partie moulée **(3, 300, 301, 310).**

40. Procédé de fabrication selon l'une des revendications19 à 39 **caractérisé en ce que** l'empilement sec initial **(40)** utilisé à l'étape **a** présente, au moins au niveau de la surface sur laquelle l'ensemble **(60)** de fibres de renfort préimprégné d'un polymère thermodurcissable est apposé, des découpes ou des perforations.

41. Procédé de fabrication selon l'une des revendications 19 à 40 **caractérisé en ce qu'**un moule de forme appropriée est utilisé à l'étape **b,** pour obtenir une partie moulée (3, **300, 301, 310)** de forme complexe, par rapport à la forme de l'empilement.

42. Procédé de fabrication selon l'une des revendications 19 à 41 **caractérisé en ce que** l'élément composite intermédiaire **(2, 200, 201, 202)** obtenu est destiné à former une charnière, un point d'accroche, une nervure, une poutre nervurée, un support, une console, un canal, une attache, une chape, un raidisseur, un encadrement de trappe, un encadrement de porte, un bras de levier, une embase, une ferrure, une jointure, un emboitement ou un pivot.

43. Utilisation d'un élément composite intermédiaire **(2, 200, 201, 202)** selon l'une des revendications 1 à 18 ou d'un élément composite intermédiaire **(2, 200, 201, 202)** obtenu selon le procédé de l'une quelconque des revendications 19 à 42 pour la réalisation d'une pièce composite **(1, 100, 101),** en combinaison avec une résine **(10)** thermodurcissable, thermoplastique ou un mélange de telles résines, qui est infusé(e) ou injecté(e) dans l'empilement sec **(4, 400, 401, 410)** de l'élément composite intermédiaire **(2, 200, 201, 202),** dans des conditions conduisant à sa réticulation dans le cas de l'utilisation d'une résine **(10)** thermodurcissable, ladite infusion ou injection étant suivie d'un refroidissement, l'utilisation d'une résine thermodurcissable ou d'un mélange de résines thermodurcissables étant préférée.

44. Procédé de fabrication d'une pièce composite **(100, 101)** comprenant les étapes suivantes :
**A1-** disposer d'un élément composite intermédiaire **(2, 200, 201, 202)** selon l'une des revendications 1 à 18 ou d'un élément composite intermédiaire **(2, 200, 201, 202)** obtenu selon le procédé de l'une quelconque des revendications 19 à 42,
**A2-** apposer ledit élément composite intermédiaire **(2, 200, 201, 202)** sur au moins une partie de la surface d'un empilement sec de plis de renfort fibreux, nommé empilement sec additionnel **(700, 702),** de manière à ce que l'empilement sec **(4, 400, 410)** de l'élément composite intermédiaire **(2, 200, 202),** vienne appuyer contre l'empilement sec additionnel **(700, 702),**
**A3-** infuser ou injecter une résine **(10)** thermodurcissable, thermoplastique ou un mélange de telles résines, à la fois dans l'empilement sec **(4, 400, 410)** de l'élément composite intermédiaire **(2, 200, 202)** et dans l'empilement sec additionnel **(700, 702),** dans des conditions conduisant à sa réticulation dans le cas de l'utilisation d'une résine thermodurcissable **(10),** ladite infusion ou injection étant suivie d'un refroidissement permettant d'obtenir la pièce composite **(100, 101)** finale souhaitée.

45. Pièce composite **(100, 101)** obtenue selon le procédé de fabrication de la revendication 44.

## Patentansprüche

1. Zwischenverbundelement (2, 200, 201, 202), umfassend:
- mindestens einen modulierten Teil (3, 300, 301, 310), umfassend eine Einheit von Verstärkungsfasern, die in eine Matrix aus wärmegehärtetem Polymer integriert sind,
- mindestens eine Trockenstapelung (4, 400, 401, 410) von Schichten (5) aus Verstärkungsfasern, umfassend mindestens eine poröse Polymerschicht, die zwischen zwei aufeinander folgenden Schichten (5) von Verstärkungsfasern eingeschoben ist, wobei der geformte Teil (3, 300, 301, 310) auf der Oberfläche der Stapelung angebracht und mit dieser Letzteren verbunden ist, wobei das Zwischenverbundelement derart ist, dass das wärmegehärtete Polymer in einen Teil der Dicke der Trockenstapelung (4, 400, 401, 410) ausgehend von der Oberfläche der Trockenstapelung (4, 400, 401, 410) eindringt, auf der der geformte Teil (3, 300, 301, 310) angebracht ist, wodurch die Verbindung zwischen der Trockenstapelung (4, 400, 401, 410) und dem geformten Teil (3, 300, 301, 310) sichergestellt wird.

2. Zwischenverbundelement (2, 200, 201, 202) nach Anspruch 1, **dadurch gekennzeichnet, dass** die Trockenstapelung (4, 400, 401, 410) von Schichten (5) aus Verstärkungsfasern eine mittler Dicke von mindestens 5 mm aufweist und das wärmegehärtete Polymer in einen Teil der Dicke der Stapelung ausgehend von der Oberfläche der Stapelung gemäß einer mittleren Eindringungstiefe von mindestens 2 mm eindringt.

3. Zwischenverbundelement (2, 200, 201, 202) nach Anspruch 1 oder 2, **dadurch gekennzeichnet, dass** die Trockenstapelung (4, 400, 401, 410) einen Polymerteil umfasst, der höchstens 10 % der Gesamtmasse der Stapelung darstellt, vorzugsweise 0,5 bis 10 % der Gesamtmasse der Stapelung und insbesondere von 2 bis 6 % der Gesamtmasse der Stapelung, wobei der Polymerteil mindestens teilweise die Kohäsion der Stapelung sicherstellt.

4. Zwischenverbundelement (2, 200, 201, 202) nach Anspruch 3, **dadurch gekennzeichnet, dass** der Polymerteil ein thermoplastisches Polymer ist, ein Polymer, das einen thermoplastischen Teil oder eine Mischung derartiger Polymere umfasst.

5. Zwischenverbundelement (2, 200, 201, 202) nach einem der Ansprüche 1 bis 4, **dadurch gekennzeichnet, dass** die Schichten (5) aus Verstärkungsfasern Gewebe sind.

6. Zwischenverbundelement (2, 200, 201, 202) nach einem der Ansprüche 1 bis 4, **dadurch gekennzeichnet, dass** die Schichten (5) aus Verstärkungsfasern unidirektionale Bahnen aus Verstärkungsfasern sind, die gemäß mindestens zwei verschiedenen Richtungen ausgerichtet sind.

7. Zwischenverbundelement (2, 200, 201, 202) nach Anspruch 6, **dadurch gekennzeichnet, dass** die Trockenstapelung (4, 400, 401, 410) aus einer oder mehreren NCF gebildet ist, wobei jede NCF eine Einheit aus mehreren unidirektionalen Bahnen aus Verstärkungsfasern ist, die gemäß mindestens zwei verschiedenen Richtungen ausgerichtet sind, die durch Nähen oder Stricken verbunden sind.

8. Zwischenverbundelement (2, 200, 201, 202) nach Anspruch 6, **dadurch gekennzeichnet, dass** die Trockenstapelung (4, 400, 401, 410) aus einer oder mehreren NCF gebildet ist, wobei jede NCF eine Einheit aus mehreren unidirektionalen Stoffen aus Verstärkungsfasern ist, die gemäß mindestens zwei verschiedenen Richtungen ausgerichtet sind, wobei eine oder mehrere poröse Polymerschicht(en) auf der Oberfläche vorhanden sein kann/können, wobei die Einheit durch Nähen oder Stricken verbunden ist.

9. Zwischenverbundelement (2, 200, 201, 202) nach einem der Ansprüche 1 bis 8, **dadurch gekennzeichnet, dass** die vorhandene(n) poröse(n) Polymerschicht(en) ein Film, ein Gitter, eine Pulverablagerung, ein Stoff oder vorzugsweise ein Vliesstoff oder ein Tuch ist/sind.

10. Zwischenverbundelement (2, 200, 201, 202) nach einem der Ansprüche 1 bis 9, **dadurch gekennzeichnet, dass** die Trockenstapelung (4, 400, 401, 410) eine Kohärenz aufweist, die mindestens teilweise dank einer Heißverklebung der porösen Polymerschicht(en) erhalten wird, die zwischen zwei Schichten (5) aus Verstärkungsfasern vorhanden ist/sind.

11. Zwischenverbundelement (2, 200, 201, 202) nach einem der Ansprüche 1 bis 10, **dadurch gekennzeichnet, dass** die Verstärkungsfasern der Trockenstapelung (4, 400, 401, 410) und/oder des geformten Teils (3, 300, 301, 310) Glas-, Kohlenstoff-, Aramid- oder Keramikfasern sind, wobei insbesondere die Kohlenstofffasern bevorzugt werden.

12. Zwischenverbundelement (2, 200, 201, 202) nach einem der Ansprüche 1 bis 11, **dadurch gekennzeichnet, dass** der geformte Teil (3, 300, 301, 310) durch Formen von unidirektionellen Faserstücken erhalten wird, die mit einem thermohärtbaren Harz imprägniert sind, das vorzugsweise ein Zwischenband bildet, auf dem die Stücke auf zufällige Weise angeordnet sind.

13. Zwischenverbundelement (2, 200, 201, 202) nach Anspruch 12, **dadurch gekennzeichnet, dass** die Stücke rechtwinklig oder im Wesentlichen rechtwinklig sind und vorzugsweise eine Länge von 1 cm bis 10 cm, eine Breite von 2 mm bis 2 cm und eine Dicke von 0,02 mm bis 0,50 mm aufweisen.

14. Zwischenverbundelement (2, 200, 201, 202) nach einem der Ansprüche 1 bis 13, **dadurch gekennzeichnet, dass** das wärmegehärtete Polymer des geformten Teils (3, 300, 301, 310) ein Epoxid ist.

15. Zwischenverbundelement (2, 200, 201, 202) nach einem der Ansprüche 1 bis 14, **dadurch gekennzeichnet, dass** das wärmegehärtete Polymer mindestens 25 Massenprozent des geformten Teils (3, 300, 301, 310), vorzugsweise von 25 bis 55 Massenprozent des geformten Teils (3, 300, 301, 310) aufweist.

16. Zwischenverbundelement (2, 200, 201, 202) nach einem der Ansprüche 1 bis 15, **dadurch gekennzeichnet, dass** die Trockenstapelung (4, 400, 401, 410) von 4 bis 20 Schichten (5) aus Verstärkungsfasern, vorzugsweise 8 bis 16 Schichten (5) aus Verstärkungsfasern und auf vorteilhafte Weise mindestens 2, vorzugsweise mindestens 4 Schichten (5) aus Verstärkungsfasern der Trockenstapelung (4, 400, 401, 410) umfasst, die kein wärmegehärtetes Polymer umfasst, das ausgehend von dem geformten Teil (3, 300, 301, 310) eingedrungen ist.

17. Zwischenverbundelement (2, 200, 201, 202) nach einem der Ansprüche 1 bis 16, **dadurch gekennzeichnet, dass** der geformte Teil (3, 300, 301, 310) eine komplexe Form mit Bezug auf die Form der Stapelung aufweist.

18. Zwischenverbundelement (2, 200, 201, 202) nach einem der Ansprüche 1 bis 17, **dadurch gekennzeichnet, dass** der geformte Teil (3, 300, 301, 310) die Form eines Scharniers, eines Befestigungspunkts, einer Rippe, eines gerippten Balkens, eines Trägers, einer Konsole, eines Kanals, einer Befestigung, einer Abdeckung, einer Versteifung, der Einrahmung einer Klappe, der Einrahmung einer Tür, eines Hebelarms, eines Sockels, eines Eisenbeschlags, eines Gelenks, einer Verschachtelung oder eines Drehpunkts aufweist.

19. Herstellungsverfahren eines Zwischenverbundelements (2, 200, 201, 202), umfassend:
- mindestens einen geformten Teil (3, 300, 301, 310), umfassend eine Einheit aus Verstärkungsfasern, die in eine Matrix aus wärmegehärtetem Polymer integriert sind,
- mindestens eine Trockenstapelung (4, 400, 401, 410) von Schichten (5) aus Verstärkungsfasern, umfassend mindestens eine poröse Polymerschicht, die zwischen zwei aufeinander folgenden Schichten (5) aus Verstärkungsfasern eingeschoben ist, wobei der geformte Teil (3, 300, 301, 310) auf der Oberfläche der Stapelung angebracht ist und mit dieser Letzteren verbunden ist, wobei das Herstellungsverfahren die folgenden aufeinanderfolgenden Schritte umfasst:
a- Anbringen mindestens einer Einheit (60) aus Verstärkungsfasern, die mit einem wärmehärtbaren Polymer vorimprägniert sind, auf einem Oberflächenbereich (70) auf einer anfänglichen Trockenstapelung (40) fasriger Verstärkungsfalten (50), umfassend mindestens eine poröse Polymerschicht, die zwischen zwei aufeinander folgenden Schichten (50) aus Verstärkungsfasern eingeschoben ist, b- Durchführen, in einer Form, eines Vorgangs des Heißformpressens der Einheit (60) aus Verstärkungsfasern, die mit einem wärmehärtbaren Polymer vorimprägniert ist, abgelegt auf der anfänglichen Trockenstapelung (40) fasriger Verstärkungsfalten (50), die zur Vernetzung des wärmehärtbaren Polymers und sein Eindringen in einen Teil der Dicke der Stapelung führt, c- Durchführen einer Abkühlung, die zum Erhalt eines geformten Teils (3, 300, 301, 310) führt, umfassend die Einheit von Verstärkungsfasern, die in das wärmegehärtete Polymer integriert sind, die eine Matrix bildet, mit einer Eindringung des wärmegehärteten Polymers in einen Teil der Dicke der Trockenstapelung (4, 400, 401, 410) ausgehend von seiner Oberfläche, auf der der geformte Teil (3, 300, 301, 310) angebracht ist, wobei der geformte Teil (3, 300, 301, 310) auf diese Weise dank dieser Eindringung des wärmegehärteten Polymers mit der Trockenstapelung (4, 400, 401, 410) von Schichten (5) aus so erhaltenen Verstärkungsfasern verbunden ist.

20. Herstellungsverfahren nach Anspruch 19, **dadurch gekennzeichnet, dass** die Einheit (60) aus Verstärkungsfasern, die mit einem wärmehärtbaren Polymer vorimprägniert ist, die in Schritt a angebracht ist, die Form einer Vorform des gewünschten geformten Teils (3, 300, 301, 310) aufweist.

21. Herstellungsverfahren nach Anspruch 19 oder 20, **dadurch gekennzeichnet, dass** die fasrigen Verstärkungsfalten, die die anfängliche Trockenstapelung (40) bilden, die in Schritt a verwendet wird, unidirektionale Bahnen aus Verstärkungsfasern sind, die auf mindestens einer ihrer Seiten mit einer porösen Polymerschicht assoziiert sind, wobei die porösen Polymerschichten, die in der Falte vorhanden sind, höchstens 10 % der Gesamtmasse der Falte darstellen, vorzugsweise 0,5 bis 10 % der Gesamtmasse der Falte, und insbesondere von 2 bis 6 % der Gesamtmasse der Falte, und wobei mindestens eine poröse Polymerschicht, zwischen zwei unidirektionale Bahnen aus aufeinanderfolgenden Verstärkungsfasern eingeschoben ist.

22. Herstellungsverfahren nach Anspruch 21, **dadurch gekennzeichnet, dass** die fasrigen Verstärkungsfalten (50), die die anfängliche Trockenstapelung (40) bilden, die in Schritt a verwendet wird, aus einer unidirektionalen Bahn aus Verstärkungsfasern gebildet sind, die auf jeder ihrer Seiten mit einer porösen Polymerschicht assoziiert ist, und die porösen Polymerschichten, die auf jeder der Seiten der unidirektionalen Bahn aus Verstärkungsfasern vorhanden sind, identisch sind.

23. Herstellungsverfahren nach Anspruch 19 oder 20, **dadurch gekennzeichnet, dass** die fasrigen Verstärkungsfalten (50), die die anfängliche Trockenstapelung (40) bilden, Stoffe aus Verstärkungsfasern sind, die auf mindestens einer ihrer Seiten mit einer porösen Polymerschicht assoziiert sind, wobei die poröse(n) Polymerschicht(en), die in der Falte vorhanden sind, höchstens 10 % der Gesamtmasse der Falte darstellen, vorzugsweise 0,5 bis 10 % der Gesamtmasse der Falte, und insbesondere von 2 bis 6 % der Gesamtmasse der Falte, und wobei mindestens eine poröse Polymerschicht zwischen zwei aufeinanderfolgenden Stoffen eingeschoben ist.

24. Herstellungsverfahren nach einem der Ansprüche 20 bis 23, **dadurch gekennzeichnet, dass** die poröse(n) Polymerschicht(en), die in den Falten vorhanden ist/sind, eine Heißverklebung aufweist/aufweisen, und die Assoziierung der unidirektionalen Bahn oder des Stoffs und der mindestens einen porösen Polymerschicht, die eine Falte darstellt, zuvor dank einer Heißverklebung der porösen Polymerschicht erhalten wurde(n).

25. Herstellungsverfahren nach einem der Ansprüche 20 bis 24, **dadurch gekennzeichnet, dass** die anfängliche Trockenstapelung (40) von fasrigen Verstärkungsfalten (50), die in Schritt a verwendet wird, eine Kohärenz aufweist, die dank der Heißverklebung der vorhandenen porösen Polymerschicht(en) erhalten wurde.

26. Herstellungsverfahren nach Anspruch 25, **dadurch gekennzeichnet, dass** die anfängliche Trockenstapelung (40) fasriger Verstärkungsfalten (50), die in Schritt a verwendet wird, vorgeformt ist.

27. Herstellungsverfahren nach einem der Ansprüche 20 bis 24, **dadurch gekennzeichnet, dass** die anfängliche Trockenstapelung (40) fasriger Verstärkungsfalten (50), die in Schritt a verwendet wird, keine Kohärenz aufweist, wobei ihre Kohärenz am Ende von Schritt b dank einer Heißverklebung der vorhandenen porösen Polymerschicht(en) erhalten wird.

28. Verfahren nach einem der Ansprüche 20 bis 27, **dadurch gekennzeichnet, dass** die poröse(n) Polymerschicht(en), die in den Falten (50) der anfänglichen Trockenstapelung (40) vorhanden sind, die in Schritt a verwendet wird, ein thermoplastisches Polymer oder ein Polymer mit einem thermoplastischen Teil umfasst/umfassen oder daraus besteht/bestehen.

29. Verfahren nach einem der Ansprüche 20 bis 28, **dadurch gekennzeichnet, dass** die poröse(n) Polymerschicht(en), die in der Falte (50) der anfänglichen Trockenstapelung (40) vorhanden ist/sind, die in Schritt a verwendet wird, ein poröser Film, ein Gitter, eine Pulverablagerung, ein Gewebe oder vorzugsweise ein Vliesstoff oder ein Tuch ist/sind.

30. Herstellungsverfahren nach Anspruch 19 oder 20, **dadurch gekennzeichnet, dass** die fasrigen Verstärkungsfalten (50), die die anfängliche Trockenstapelung (40) bilden, unidirektionale Bahnen aus Verstärkungsfasern sind, die gemäß mindestens zwei verschiedenen Richtungen ausgerichtet sind, die durch Nähen oder Stricken verbunden sind.

31. Herstellungsverfahren nach Anspruch 30, **dadurch gekennzeichnet, dass** die anfängliche Trockenstapelung (40) aus mehreren NCF gebildet ist, wobei jede NCF eine Einheit von mehreren unidirektionalen Bahnen ist, die gemäß mindestens zwei verschiedenen Richtungen ausgerichtet sind, wobei eine oder mehrere poröse Polymerschicht(en) auf der Oberfläche vorhanden sein kann/können, wobei die Einheit durch Nähen oder Stricken verbunden ist.

32. Herstellungsverfahren nach Anspruch 30 oder 31, **dadurch gekennzeichnet, dass** das Nähen oder Stricken durch Glas-, Kohlenstoff-, Basalt-, Silizium-, Polyesterfäden oder Fäden aus einem thermoplastischen Polymer sichergestellt ist, wobei insbesondere Fäden aus einem thermoplastischen Polymer einen Wert in einem Bereich darstellen, der von 5 bis 150 dTex reicht, und vorzugsweise in einem Bereich, der von 5 bis 30 dTex reicht.

33. Verfahren nach einem der Ansprüche 19 bis 32, **dadurch gekennzeichnet, dass** die Fasern der fasrigen Verstärkungsfalten (50) der anfänglichen Trockenstapelung (40) und/oder der Einheit (60) aus vorimprägnierten Verstärkungsfasern Glas-, Kohlenstoff-, Aramid- oder Keramikfasern sind, wobei die Kohlenstofffasern insbesondere bevorzugt sind.

34. Herstellungsverfahren nach einem der Ansprüche 19 bis 33, **dadurch gekennzeichnet, dass** die vorimprägnierten Verstärkungsfasern eines wärmehärtbaren Polymers, die die Einheit (60) darstellen, die ausgelegt ist, um den geformten Teil (3, 300, 301, 310) zu bilden, unidirektionale Faserstücke, imprägniert mit einem wärmehärtbaren Polymer, sind, die vorzugsweise ein Zwischenband bilden, in dem die Stücke auf zufällige Weise angeordnet sind.

35. Herstellungsverfahren nach Anspruch 34, **dadurch gekennzeichnet, dass** die Stücke rechtwinklig oder im Wesentlichen rechtwinklig sind und vorzugsweise eine Länge von 1 cm bis 10 cm, eine Breite von 2 mm bis 2 cm und eine Dicke von 0,02 mm bis 0,50 mm aufweisen.

36. Herstellungsverfahren nach einem der Ansprüche 19 bis 35, **dadurch gekennzeichnet, dass** das wärmehärtbare Polymer der Einheit (60), die ausgelegt ist, um den geformten Teil (3, 300, 301, 310) zu bilden, ein Epoxid ist.

37. Herstellungsverfahren nach einem der Ansprüche 19 bis 36, **dadurch gekennzeichnet, dass** das wärmehärtbare Polymer der Einheit, das ausgelegt ist, um den geformten Teil (3, 300, 301, 310) zu bilden, mindestens 25 Massenprozent der Einheit, vorzugsweise von 25 bis 55 Massenprozent der Einheit darstellt.

38. Herstellungsverfahren nach einem der Ansprüche 19 bis 37, **dadurch gekennzeichnet, dass** Schritt b der Pressformung die Verbreitung des wärmehärtbaren Polymers verursacht, das am Ende in seinem wärmegehärteten Zustand in einen Teil der Dicke der Stapelung auf der Ebene der Schnittstelle mit dem geformten Teil (3, 300, 301, 310) eindringt, wobei die erhaltene Trockenstapelung von Schichten (5) aus Verstärkungsfasern eine mittlere Dichte von mindestens 5 mm aufweist und das wärmegehärtete Polymer, das in einen Teil der Dicke der Stapelung ausgehend von der Oberfläche des Stapelung gemäß einer mittleren Eindringungstiefe von mindestens 2 mm eindringt.

39. Herstellungsverfahren nach einem der Ansprüche 19 bis 38, **dadurch gekennzeichnet, dass** in Schritt a die anfängliche Trockenstapelung (40) von fasrigen Verstärkungsfalten 4 bis 20 Falten, vorzugsweise 8 bis 16 Falten umfasst und auf vorteilhafte Weise am Ende von Schritt b mindestens 2, vorzugsweise mindestens 4 Schichten (5) aus Verstärkungsfasern der anfänglichen Stapelung (4, 400, 401, 410) kein wärmegehärtetes Polymer umfassen, das ausgehend vom geformten Teil (3, 300, 301, 310) eingedrungen ist.

40. Herstellungsverfahren nach einem der Ansprüche 19 bis 39, **dadurch gekennzeichnet, dass** die anfängliche Trockenstapelung (40), die in Schritt a verwendet wird, mindestens auf der Ebene der Oberfläche, auf der die Einheit (60) von vorimprägnierten Verstärkungsfasern eines wärmehärtbaren Polymers aufgebracht ist, Schnitte oder Perforationen aufweist.

41. Herstellungsverfahren nach einem der Ansprüche 19 bis 40, **dadurch gekennzeichnet, dass** in Schritt b eine Form mit geeigneter Ausgestaltung verwendet wird, um einen geformten Teil (3, 300, 301, 310) mit komplexer Gestalt mit Bezug auf die Gestalt der Stapelung zu erhalten.

42. Herstellungsverfahren nach einem der Ansprüche 19 bis 41, **dadurch gekennzeichnet, dass** das erhaltene Zwischenverbundmaterial (2, 200, 201, 202) ausgelegt ist, um ein Scharnier, einen Befestigungspunkt eine Rippe, einen gerippten Balken, einen Träger, eine Konsole, einen Kanal, eine Befestigung, eine Abdeckung, eine Versteifung, die Einrahmung einer Klappe, die Einrahmung einer Tür, einen Hebelarm, einen Sockel, einen Eisenbeschlag, ein Gelenk, eine Verschachtelung oder eines Drehpunkts zu bilden.

43. Verwendung eines Zwischenverbundelements (2, 200, 201, 202) nach einem der Ansprüche 1 bis 18 oder eines Zwischenverbundelements (2, 200, 201, 202), erhalten gemäß dem Verfahren eines der Ansprüche 19 bis 42 zur Herstellung eines Verbundteils (1, 100, 101) in Kombination mit einem wärmehärtbaren, thermoplastischen Harz oder einer Mischung derartiger Harze (10), das/die in die Trockenstapelung (4, 400, 401, 410) des erhaltenen Zwischenverbundelements (2, 200, 201, 202) unter Bedingungen eingeführt oder injiziert ist/sind, die zu ihrer Vernetzung für den Fall der Verwendung eines wärmehärtbaren Harzes (10) führt, wobei der Einführung oder Injektion eine Abkühlung folgt, wobei die Verwendung eines wärmehärtbaren Harzes oder einer Mischung von wärmehärtbaren Harzen bevorzugt wird.

44. Herstellungsverfahren eines Verbundteils (100, 101), umfassend die folgenden Schritte:
A1 - Anordnen eines Zwischenverbundelements (2, 200, 201, 202) nach einem der Ansprüche 1 bis 18 oder eines Zwischenverbundelements (2, 200, 201, 202), erhalten nach dem Verfahren eines der Ansprüche 19 bis 42, Anbringen des Zwischenverbundelements (2, 200, 201, 202) auf mindestens einem Teil der Oberfläche einer Trockenstapelung von fasrigen Verstärkungsfalten, bezeichnet als zusätzliche Trockenstapelung (700, 702), so dass die Trockenstapelung (4, 400, 401, 410) des Zwischenverbundelements (2, 200, 202) gegen die zusätzlichen Trockenstapelung (700, 702) drückt, gleichzeitiges Einführen oder Injizieren eines wärmehärtbaren, thermoplastischen Harzes (10) oder einer Mischung derartiger Harze in die Trockenstapelung (4, 400, 410) des Zwischenverbundelements (2, 200, 202) und in die zusätzliche Trockenstapelung (700, 702) unter Bedingungen, die zu ihrer Vernetzung für den Fall der Verwendung eines wärmehärtbaren Harzes (10) führt, wobei der Einführung oder Injektion eine Abkühlung folgt, die ermöglicht, wie gewünscht das endgültige Verbundteil (100, 101) zu erhalten.

45. Verbundteil (100, 101), erhalten gemäß dem Herstellungsverfahren von Anspruch 44.

## Claims

1. Intermediate composite element (**2, 200, 201, 202)** comprising:
- at least one molded portion **(3, 300, 301, 310)** comprising an assembly of reinforcing fibers embedded in a thermoset polymer matrix,
- at least one dry stack **(4, 400, 401, 410)** of layers of reinforcing fibers **(5),** comprising at least one porous polymeric layer inserted between two successive layers of reinforcing fibers **(5),** the molded portion **(3, 300, 301, 310)** being affixed to the surface of the stack and bonded thereto, the intermediate composite element is such that the thermoset polymer partially penetrates the thickness of the dry stack **(4, 400, 401, 410)** from the surface of the dry stack **(4, 400, 401, 410)** to which the molded portion **(3, 300, 301, 310)** is affixed, thereby providing the bond between the dry stack **(4, 400, 401, 410)** and the molded portion (3, **300, 301, 310).**

2. Intermediate composite element **(2, 200, 201, 202)** according to Claim 1, **characterized in that** the dry stack **(4, 400, 401, 410)** of layers of reinforcing fibers **(5)** has an average thickness of at least 5 mm and the thermoset polymer partially penetrates the thickness of the stack from the stack surface to an average penetration depth of at least 2 mm.

3. Intermediate composite element **(2, 200, 201, 202)** according to Claim 1 or 2, **characterized in that** the dry stack **(4, 400, 401, 410)** comprises a polymeric portion representing at most 10% of the total weight of the stack, preferably from 0.5% to 10% of the total weight of the stack, and more preferably from 2% to 6% of the total weight of the stack, said polymeric portion contributing at least partially to the cohesion of the stack.

4. Intermediate composite element **(2, 200, 201, 202)** according to Claim 3, **characterized in that** the polymeric portion is a thermoplastic polymer, a polymer comprising a thermoplastic, or a mixture of such polymers.

5. Intermediate composite element **(2, 200, 201, 202)** according to one of Claims 1 to 4, **characterized in that** the layers of reinforcing fibers **(5)** are fabrics.

6. Intermediate composite element **(2, 200, 201, 202)** according to one of Claims 1 to 4, **characterized in that** the layers of reinforcing fibers **(5)** are unidirectional sheets of reinforcing fibers oriented in at least two different directions.

7. Intermediate composite element **(2, 200, 201, 202)** according to Claim 6, **characterized in that** the dry stack **(4, 400, 401, 410)** is formed from one or more non-crimp fabrics (NCFs), each NCF being an assembly of a plurality of unidirectional sheets of reinforcing fibers oriented in at least two different directions bonded by sewing or knitting.

8. Intermediate composite element **(2, 200, 201, 202)** according to Claim 6 **characterized in that** the dry stack **(4, 400, 401, 410)** is formed from one or more NCFs, each NCF being an assembly of a plurality of unidirectional sheets of reinforcing fibers oriented in at least two different directions, one or more porous polymeric layer(s) possibly being present on the surface, said assembly being bonded by sewing or knitting.

9. Intermediate composite element **(2, 200, 201, 202)** according to one of Claims 1 to 8, **characterized in that** the porous polymeric layer(s) present is(are) a porous film, a grid, a powder coating, a fabric, or, preferably, a non-woven or veil.

10. Intermediate composite element **(2, 200, 201, 202)** according to one of Claims 1 to 9, **characterized in that** the cohesion of the dry stack **(4, 400, 401, 410)** is obtained, at least partially, as a result of the hot tack properties of the porous polymeric layer(s) present between two layers of reinforcing fibers **(5).**

11. Intermediate composite element **(2, 200, 201, 202)** according to one of Claims 1 to 10, **characterized in that** the reinforcing fibers of the dry stack **(4, 400, 401, 410)** and/or of the molded portion **(3, 300, 301, 310)** are glass, carbon, aramid, or ceramic fibers, carbon fibers being particularly preferred.

12. Intermediate composite element **(2, 200, 201, 202)** according to one of Claims 1 to 11, **characterized in that** the molded portion **(3, 300, 301, 310)** is obtained by molding chips of unidirectional fibers impregnated with a thermosetting resin, which preferably forms an intermediate mat wherein the chips are arranged randomly.

13. Intermediate composite element **(2, 200, 201, 202)** according to Claim 12, **characterized in that** the chips are rectangular or substantially rectangular, preferably having a length from 1 cm to 10 cm, a width from 2 mm to 2 cm, and a thickness from 0.02 mm to 0.50 mm.

14. Intermediate composite element **(2, 200, 201, 202)** according to one of Claims 1 to 13, **characterized in that** the thermoset polymer of the molded portion **(3, 300, 301, 310)** is an epoxy.

15. Intermediate composite element **(2, 200, 201, 202)** according to one of Claims 1 to 14, **characterized in that** the thermoset polymer is at least 25% by weight of the molded portion **(3, 300, 301, 310),** preferably 25% to 55% by weight of the molded portion **(3, 300, 301, 310).**

16. Intermediate composite element **(2, 200, 201, 202)** according to one of Claims 1 to 15, **characterized in that** the dry stack **(4, 400, 401, 410)** comprises 4 to 20 layers of reinforcing fibers **(5),** preferably 8 to 16 layers of reinforcing fibers **(5)** and, advantageously at least 2, preferably at least 4 layers of reinforcing fibers **(5)** of the dry stack **(4, 400, 401, 410)** do not contain any thermoset polymer that has penetrated from the molded portion **(3, 300, 301, 310).**

17. Intermediate composite element **(2, 200, 201, 202)** according to one of Claims 1 to 16, **characterized in that** the molded portion **(3, 300, 301, 310)** has a complex shape, as compared to the shape of the stack.

18. Intermediate composite element **(2, 200, 201, 202)** according to one of Claims 1 to 17, **characterized in that** the molded portion **(3, 300, 301, 310)** has the shape of a hinge, a point of attachment, a rib, a ribbed beam, a support, a bracket, a channel, a tie, a clevis, a stiffener, a hatch frame, a door frame, a lever arm, a base, a fitting, a joint, a socket, or a pivot.

19. Process for the production of an intermediate composite element **(2, 200, 201, 202)** comprising:
- at least one molded portion **(3, 300, 301, 310)** comprising an assembly of reinforcing fibers embedded in a thermoset polymer matrix,
- at least one dry stack **(4, 400, 401, 410)** of layers of reinforcing fibers **(5),** comprising at least one polymeric porous layer inserted between two successive layers of reinforcing fibers **(5),** the molded portion **(3, 300, 301, 310)** being affixed and bonded to the surface of the stack, said production process comprising the following successive steps:
**a-** affixing at least one assembly **(60)** of reinforcing fibers preimpregnated with a thermosetting polymer, on a surface region **(70)** of an initial dry stack **(40)** of reinforcing fiber plies **(50),** comprising at least one polymeric porous layer inserted between two successive layers of reinforcing fibers **(50),**
**b-** performing, in a mold, a hot compression molding operation of the assembly **(60)** of reinforcing fibers preimpregnated with the thermosetting polymer, deposited on the initial dry stack **(40)** of reinforcing fiber plies **(50),** resulting in cross-linking of the thermosetting polymer and its partial penetration into the thickness of the stack,
**c-** performing a cooling operation, resulting in a molded portion **(3, 300, 301, 310)** comprising the assembly of reinforcing fibers embedded in the thermoset polymer, forming a matrix, with partial penetration of the thermoset polymer into the thickness of the dry stack **(4, 400, 401, 410)** from its surface to which said molded portion **(3, 300, 301, 310)** is affixed, said molded portion **(3, 300, 301, 310)** thus being bonded, as a result of this penetration of the thermoset polymer, to the dry stack **(4, 400, 401, 410)** of layers of reinforcing fibers **(5)** thereby obtained.

20. Production process according to Claim 19, **characterized in that** the assembly **(60)** of reinforcing fibers preimpregnated with a thermosetting polymer affixed in step **a** is in the form of a preform of the desired molded portion **(3, 300, 301, 310).**

21. Production process according to Claim 19 or 20, **characterized in that** the reinforcing fiber plies forming the initial dry stack **(40)** used in step **a** are unidirectional sheets of reinforcing fibers, combined on at least one of their sides with a porous polymeric layer, the porous polymeric layer(s) present in said ply representing at most 10% of the total weight of said ply, preferably from 0.5% to 10% of the total weight of said ply, and more preferably from 2% to 6% of the total weight of said ply, and at least one porous polymeric layer being inserted between two successive unidirectional layers of reinforcing fibers.

22. Production process according to Claim 21, **characterized in that** the reinforcing fiber plies **(50)** forming the initial dry stack **(40)** used in step **a** consist of a unidirectional sheet of reinforcing fibers, combined on both of its sides with a porous polymeric layer, and the porous polymeric layers on each of the sides of the unidirectional sheet of reinforcing fibers are identical.

23. Production process according to Claim 19 or 20, **characterized in that** the reinforcing fiber plies **(50)** forming the initial dry stack **(40)** are fabrics made of reinforcing fibers, combined on at least one of their sides with a porous polymeric layer, with the porous polymeric layer(s) present in said ply representing at most 10% of the total weight of said ply, preferably from 0.5% to 10% of the total weight of said ply, and more preferably from 2% to 6% of the total weight of said ply, and at least one porous polymeric layer being inserted between two successive fabrics.

24. Production process according to one of Claims 20 to 23, **characterized in that** the porous polymeric layer(s) present in said plies exhibit hot tack properties and the combination of the unidirectional sheet or the fabric and said at least one porous polymeric layer consisting of a ply that has been obtained previously as a result of the hot tack properties of the porous polymeric layer.

25. Production process according to one of Claims 20 to 24, **characterized in that** the initial dry stack **(40)** of reinforcing fiber plies **(50)** used in step a has cohesion obtained as a result of the hot tack properties of the porous polymeric layer(s) present.

26. Production process according to Claim 25 **characterized in that** the initial dry stack **(40)** of reinforcing fiber plies **(50)** used in step **a** is preformed.

27. Production process according to one of Claims 20 to 24, **characterized in that** the initial dry stack **(40)** of reinforcing fiber plies **(50)** used in step **a** are not cohesive; its cohesion being obtained at the end of step **b,** as a result of the hot tack properties of the porous polymeric layer(s) present.

28. Production process according to one of Claims 20 to 27, **characterized in that** the porous polymeric layer(s) present in said plies **(50)** of the initial dry stack **(40)** used in step **a** comprise(s) or consist(s) of a thermoplastic polymer or of a polymer comprising a thermoplastic portion.

29. Production process according to one of Claims 20 to 28, **characterized in that** the porous polymeric layer(s) present in said plies **(50)** of the initial dry stack **(40)** used in step **a** is (are) a porous film, a grid, a powder coating, a fabric or, preferably, a nonwoven or a veil.

30. Production process according to Claim 19 or 20, **characterized in that** the reinforcing fiber plies **(50)** forming the initial dry stack **(40)** are unidirectional sheets of reinforcing fibers oriented in at least two different directions, bonded by sewing or knitting.

31. Production process according to Claim 30, **characterized in that** the initial dry stack **(40)** is formed from a plurality of NCFs, each NCF being an assembly of a plurality of unidirectional sheets oriented in at least two different directions, it being possible for one or more porous polymeric layers to be present on the surface, said assembly being bonded by sewing or knitting.

32. Production process according to Claim 30 or 31, **characterized in that** the sewing or knitting uses glass, carbon, basalt, silica, or polyester yarns or thermoplastic polymer yarns, in particular yarns made of a thermoplastic polymer having a titer in the range from 5 dTex to 150 dTex, and preferably in the range from 5 dTex to 30 dTex.

33. Production process according to one of Claims 19 to 32, **characterized in that** the fibers of the reinforcing fiber plies **(50)** of the initial dry stack **(40)** and/or of the assembly **(60)** of preimpregnated reinforcing fibers are glass, carbon, aramid, or ceramic fibers, carbon fibers being particularly preferred.

34. Production process according to one of Claims 19 to 33, **characterized in that** the reinforcing fibers preimpregnated with a thermosetting polymer forming the assembly **(60)** used to form the molded portion **(3, 300, 301, 310)** are chips of unidirectional fibers impregnated with a thermosetting polymer, which preferably form an intermediate mat wherein the chips are arranged randomly.

35. Production process according to Claim 34 **characterized in that** the chips are rectangular or substantially rectangular, and preferably have a length from 1 cm to 10 cm, a width from 2 mm to 2 cm, and a thickness from 0.02 mm to 0.50 mm.

36. Production process according to one of Claims 19 to 35, **characterized in that** the thermosetting polymer of the assembly **(60)** used to form the molded portion **(3, 300, 301, 310)** is an epoxy.

37. Production process according to one of Claims 19 to 36, **characterized in that** the thermosetting polymer of the assembly used to form the molded portion **(3, 300, 301, 310)** represents at least 25% by weight of said assembly, preferably from 25% to 55% by weight of said assembly.

38. Production process according to one of Claims 19 to 37, **characterized in that** step **b** of compression molding results in the diffusion of the thermosetting polymer, which, in its thermoset state, ultimately partially penetrates the thickness of the stack in the area of the interface with the molded portion **(3, 300, 301, 310),** the resulting dry stack of layers of reinforcing fibers **(5)** having an average thickness of at least 5 mm and the thermoset polymer partially penetrates the thickness of the stack from the surface of the stack to an average penetration depth of at least 2 mm.

39. Production process according to one of Claims 19 to 38, **characterized in that** in step **a,** the initial dry stack **(40)** of reinforcing fiber plies comprises from 4 to 20 plies, preferably from 8 to 16 plies, and, advantageously, at the end of step **b,** at least 2, preferably at least 4 layers of reinforcing fibers **(5)** of the dry stack **(4, 400, 401, 410)** do not include any thermoset polymer that has penetrated from the molded portion **(3, 300, 301, 310).**

40. Production process according to one of Claims 19 to 39, **characterized in that** the initial dry stack **(40)** used in step **a** has cut-outs or perforations, at least on the surface to which the assembly **(60)** of reinforcing fibers preimpregnated with a thermosetting polymer is affixed.

41. Production process according to one of Claims 19 to 40 **characterized in that** a mold of suitable shape is used in step **b,** to obtain a molded portion **(3, 300, 301, 310)** having a complex shape, as compared to the shape of the stack.

42. Production process according to one of Claims 19 to 41, **characterized in that** the intermediate composite element **(2, 200, 201, 202)** obtained is used to form a hinge, a point of attachment, a rib, a ribbed beam, a support, a bracket, a channel, a tie, a clevis, a stiffener, a hatch frame, a door frame, a lever arm, a base, a fitting, a joint, a socket, or a pivot.

43. Using an intermediate composite element **(2, 200, 201, 202)** according to one of Claims 1 to 18 or an intermediate composite element **(2, 200, 201, 202)** obtained according to the process of any one of Claims 19 to 42 for the production of a composite part **(1, 100, 101),** in combination with a thermosetting resin **(10),** a thermoplastic resin, or a mixture of such resins, which is infused or injected into the dry stack **(4, 400, 401, 410)** of the intermediate composite element **(2, 200, 201, 202),** under conditions resulting in its cross-linking in the case where a thermosetting resin **(10)** is used, said infusion or injection being followed by cooling, using a thermosetting resin or a mixture of thermosetting resins being preferred.

44. Process for the production of a composite part **(100, 101)** comprising the following steps:
**A1-** providing an intermediate composite element **(2, 200, 201, 202)** according to one of Claims 1 to 18 or an intermediate composite element **(2, 200, 201, 202)** obtained according to the process in any one of Claims 19 to 42,
**A2-** affixing said intermediate composite element **(2, 200, 201, 202)** to at least a portion of the surface of a dry stack of reinforcing fiber plies, referred to as an additional dry stack **(700, 702),** in such a way that the dry stack **(4, 400, 410)** of the intermediate composite element **(2, 200, 202)** abuts the additional dry stack **(700, 702),**
**A3-** infusing or injecting a thermosetting, thermoplastic resin **(10)** or a mixture of such resins, both into the dry stack **(4, 400, 410)** of the intermediate composite element **(2, 200, 202)** and the additional dry stack **(700, 702),** under conditions resulting in cross-linking in the case where a thermosetting resin **(10)** is used, said infusion or injection being followed by cooling thus making it possible to obtain the desired final composite part **(100, 101).**

45. Composite part **(100, 101)** obtained according to the production process of Claim 44.
